# EUROPEAN PATENT SPECIFICATION

(11) **EP 3 375 669 B1**
(45) Date of publication and mention of the grant of the patent: **06.11.2019**
(21) Application number: 17206847.0
(22) Date of filing: 12.12.2017
(51) Int. Cl.: B60R 13/08, B62D 33/06, B60K 13/02, A01D 34/00

(54) **WORK VEHICLE**
NUTZFAHRZEUG
VÉHICULE DE TRAVAIL

(30) Priority: 15.03.2017 JP 2017050245; 14.04.2017 JP 2017080401; 01.06.2017 JP 2017109379
(43) Date of publication of application: 19.09.2018
(73) Proprietor: Kubota Corporation, Osaka-shi, Osaka 556-8601 (JP)
(72) Inventor: TERAOKA, Tasuku, SAKAI-SHI, OSAKA, 590-0823 (JP); HASHIMOTO, Taisuke, SAKAI-SHI, OSAKA, 590-0823 (JP); TONOYA, Yoshihisa, SAKAI-SHI, OSAKA, 590-0823 (JP); FUJII, Yuto, SAKAI-SHI, OSAKA, 590-0823 (JP); KUMASHIRO, Takashi, SAKAI-SHI, OSAKA, 590-0823 (JP); AKAI, Yuto, SAKAI-SHI, OSAKA, 590-0823 (JP); NAGAI, Hiroki, SAKAI-SHI, OSAKA, 590-0823 (JP); IZUMI, Masahiro, SAKAI-SHI, OSAKA, 590-0823 (JP); YAMASHITA, Nobuyuki, SAKAI-SHI, OSAKA, 590-0823 (JP); KAGO, Tatsuki, SAKAI-SHI, OSAKA, 590-0823 (JP)
(74) Representative: Cabinet Beau de Loménie

(56) References cited:
- JP-A- H0 241 931
- JP-A- 2002 264 842
- JP-A- 2008 245 608
- JP-A- 2008 289 429
- JP-U- S6 198 622
- JP-U- S56 157 118
- US-A1- 2008 079 281
- US-A1- 2013 111 868

## Description

### BACKGROUND OF THE INVENTION

### 1. Field of the Invention

The present invention relates to work vehicles such as a tractor and a passenger mowing machine.

### 2. Description of the Related Art

### (1) First Related Art

In a tractor (an example of a work vehicle) disclosed in JP H02-041931 A, a hood is provided on a prime mover unit in a front portion of a vehicle body, and an engine is arranged within the hood. An operation unit behind the prime mover unit includes a dashboard, which is located on the rear side of the hood, and an operator seat is located rearward of the dashboard at a distance.

Furthermore, an air intake box is provided in a rear portion within the hood, and engine noise is interrupted by this air intake box so as not to be transmitted to the operation unit side.

The tractor described in JP H02-041931 A uses a large wall-shaped air intake box. An outside air supply port of this air intake box is oriented toward the operation unit side in the rear, air is suctioned from the rear side, and engine cooling air is discharged from the front side of the hood. By thus suctioning air from the rear side, for example, it is easy to avoid a situation where mown grass or dust adheres to a front face of the hood and makes it difficult to suction air. This structure is more useful than a structure in which intake air to an air cleaner is suctioned from the front side of the hood and is discharged to the rear side. Due to the wall-shaped air intake box being provided on the rear side of the engine, engine noise transmitted to the operation unit side can be suppressed to some extent, and this structure is also useful on this point. However, since the outside air supply port of the air intake box is oriented toward the operation unit side in the rear, relatively large air intake sound may be propagated toward the operation unit side in the rear through this outside air supply port. There is room for improvement on this point.

That is to say, there is a demand for a work vehicle in which propagation of engine noise and air intake sound toward the operation unit side in the rear can be suppressed while avoiding the influence of clogging of a dust net on the front side of the hood when intake air toward the air cleaner is suctioned from the rear side.

### (2) Second Related Art

A passenger mowing machine (an example of a work vehicle) disclosed in JP 2016-123315 A (or counterpart US 2016/0183454 A1) includes a traveling vehicle body having a passenger-type operation unit, a mid-mount work implement that is arranged between left and right front wheels and left and right rear wheels of the traveling vehicle body, a link mechanism for supporting the work implement so as to be able to be lifted and lowered, and an attachment/detachment mechanism that enables the work implement to be attached to and detached from the link mechanism.

This passenger mowing machine is configured so that an engaging member of an intermediate structure provided in the passenger mowing machine is connected to an engaged member provided in a mower unit as a result of the front wheels riding over the mower unit, and this connection allows the mower unit to be attached to a lower body portion of the passenger mowing machine between the left and right front wheels and the left and right rear wheels.

In the case of this passenger mowing machine, the operator needs to leave the passenger mowing machine and look into the lower body portion thereof in order to check that the mower unit has been attached to the lower body portion. There is room for improvement regarding such bothersome checking.

That is to say, there is a need for the check on the attachment of the work implement to the passenger work vehicle to be able to be readily performed from the operation unit.

The work vehicles disclosed in JP S56157118, which discloses a work vehicle according to the preamble of claims 1 and 2, and JP S6198622 are also known.

### SUMMARY OF THE INVENTION

### (1) In view of "First Related Art", a work vehicle according to claim 1 is proposed.

A work vehicle comprising:
a vehicle body;
a prime mover unit provided in a front portion of the vehicle body, the prime mover unit having a hood;
an operation unit provided rearward of the prime mover unit in the vehicle body, the operation unit including a dashboard located in the rear side of the hood, and an operator seat located rearward of the dashboard at a distance; and
a partition wall member provided below the dashboard in a boundary region between the operation unit and an internal space of the hood, a ventilation hole for ventilation from the operation unit toward the internal space being formed in the partition wall member,
wherein an engine and an air cleaner are arranged in the internal space,
the engine is arranged on a vehicle body-front side within the internal space,
an air intake port of the air cleaner is open toward a rear side, rearward of the engine within the internal space, and
the partition wall member includes a sound-proof wall plate, and a sound absorbing element is attached to the sound-proof wall plate on the internal space side, and a space accommodating a battery is provided in the partition wall member below the dashboard, and the sound-proof wall plate extends in an up-down direction only in an area corresponding to a gap between the dashboard and the battery.

With this configuration, the partition wall member, which allows ventilation from the operation unit side to the internal space side of the hood, is provided in the boundary region between the internal space of the hood and the operation unit. The air intake port of the air cleaner is provided so as to be oriented toward the rear side within the hood, on a vehicle body-rear side relative to the engine. For this reason, air can be readily and reliably suctioned with little influence of a clogging state of a dust net in a front portion of the hood.

In addition, although the air intake port of the air cleaner is provided so as to be oriented toward the rear side, the sound-proof wall plate, to which the sound absorbing element is attached to the portion facing the internal space of the hood, is provided in the partition wall member provided rearward of the air cleaner, and accordingly the air intake sound of the air cleaner is dampened, and there is only a small possibility that the air intake sound is propagated as large noise across the partition wall member to the operation unit side.

In addition, a portion below the dashboard is effectively used as the space for accommodating the battery, and this battery can also be used as a sound-proof member. That is to say, by providing the sound-proof wall plate only in the area where neither the dashboard nor the battery is present, a partition wall member that can suppress noise propagated toward the operation unit side can be configured. As a result, a necessary range of the sound-proof area achieved by the sound-proof wall plate can be reduced, and a reduction in the size and costs can be achieved.

In view of "First Related Art", a work vehicle according to claim 2 is also proposed and relates to a work vehicle comprising:
a vehicle body;
a prime mover unit provided in a front portion of the vehicle body, the prime mover unit having a hood;
an operation unit provided rearward of the prime mover unit in the vehicle body, the operation unit including a dashboard located in the rear side of the hood, and an operator seat located rearward of the dashboard at a distance; and
a partition wall member provided below the dashboard in a boundary region between the operation unit and an internal space of the hood, a ventilation hole for ventilation from the operation unit toward the internal space being formed in the partition wall member,
wherein an engine and an air cleaner are arranged in the internal space,
the engine is arranged on a vehicle body-front side within the internal space,
an air intake port of the air cleaner is open toward a rear side, rearward of the engine within the internal space, and
the partition wall member includes a sound-proof wall plate, and a sound absorbing element is attached to the sound-proof wall plate on the internal space side, the partition wall member includes a main frame portion formed into a lattice shape and an outer wall plate assembled to a rear face of the main frame portion, a plurality of ventilation holes being formed in the outer wall plate, and the sound-proof wall plate being assembled to a front face of the main frame portion; the sound-proof wall plate includes a sound-insulating plate portion that is made of a sheet metal and opposes the front face of the main frame portion, and the sound absorbing element that is made of a soft resin and faces the internal space of the hood; and the sound-insulating plate portion is arranged with a gap for ventilation formed between the sound-insulating plate portion and the front face of the main frame portion.

With this configuration, the partition wall member, which allows ventilation from the operation unit side to the internal space side of the hood, is provided in the boundary region between the internal space of the hood and the operation unit. The air intake port of the air cleaner is provided so as to be oriented toward the rear side within the hood, on a vehicle body-rear side relative to the engine. For this reason, air can be readily and reliably suctioned with little influence of a clogging state of a dust net in a front portion of the hood.

In addition, although the air intake port of the air cleaner is provided so as to be oriented toward the rear side, the sound-proof wall plate, to which the sound absorbing element is attached to the portion facing the internal space of the hood, is provided in the partition wall member provided rearward of the air cleaner, and accordingly the air intake sound of the air cleaner is dampened, and there is only a small possibility that the air intake sound is propagated as large noise across the partition wall member to the operation unit side.

With the configuration, a required strength of the partition wall member is secured by the main frame portion formed into a lattice shape and the outer wall plate that includes a plurality of ventilation holes. The lattice-shaped main frame portion and the outer wall plate including the ventilation holes are employed to suppress, using the sound-proof wall plate, propagation of sound from the internal space side of the hood toward the operation unit side, while allowing ventilation from the operation unit side toward the internal space side of the hood.

That is to say, the sound-proof wall plate, which is constituted by the sound-insulating plate portion that is made of a sheet metal and the sound absorbing element that is made of a soft resin, is arranged in a state where the sound-insulating plate portion is separate from the front face side of the main frame portion to form a gap for ventilation, and air passing from the operation unit side toward the internal space side of the hood can detour the sound-proof wall plate and be taken in without problem, while suppressing propagation of sound from the internal space side of the hood toward the operation unit side. Accordingly, when outside air is introduced from the operation unit side, outside air does not need to be passed through the sound-insulating plate portion or the sound absorbing element that constitutes the sound-proof wall plate. Thus, an increase in ventilation resistance against the introduced outside air can be avoided.

More preferable configurations are proposed as under.

According to one preferred embodiment, a radiator and a cooling fan are provided rearward of the engine within the internal space, the air intake port of the air cleaner is located forward of the radiator, and the sound-proof wall plate is located rearward of the radiator.

With the configuration, the engine is in a state of being arranged so as to be relatively separated from the operator seat as far as possible, due to the radiator and the cooling fan being located at positions rearward of the engine within the hood. Then, the influence of engine noise at the operator seat position can be reduced. By positioning the air intake port of the air cleaner forward of the radiator, the air intake sound of the air cleaner can be further reduced by also using the radiator as a sound-insulating member.

According to one preferred embodiment, a space for accommodating a battery is provided in the partition wall member below the dashboard, and the sound-proof wall plate extends in an up-down direction only in an area corresponding to a gap between the dashboard and the battery.

With the configuration, a portion below the dashboard is effectively used as the space for accommodating the battery, and this battery can also be used as a sound-proof member. That is to say, by providing the sound-proof wall plate only in the area where neither the dashboard nor the battery is present, a partition wall member that can suppress noise propagated toward the operation unit side can be configured. As a result, a necessary range of the sound-proof area achieved by the sound-proof wall plate can be reduced, and a reduction in the size and costs can be achieved.

According to one preferred embodiment, an air intake pipe of the air cleaner includes a front air intake port in a front portion of the internal space, in addition to the air intake port.

With the configuration, the front air intake port is provided on the front side within the hood, in addition to the air intake port provided so as to be oriented toward the rear side. Accordingly, air intake conditions for the air cleaner can be improved without significantly increasing the noise level at the operation unit.

### (2) In view of "Second Related Art", a work vehicle, which is not claimed, as under is proposed.

A work vehicle comprising:
a traveling vehicle body including an operation unit, a front wheel and a rear wheel;
a work implement attached between the front wheel and the rear wheel of the traveling vehicle body;
a link mechanism configured to support the work implement to be lifted and lowered; and
an attachment/detachment mechanism configured to allow the link mechanism and the work implement to be attached to and detached from each other,
wherein the attachment/detachment mechanism has a rideover-connection structure in which the link mechanism is connected to the work implement through forward rideover travel during which the front wheel is caused to ride over the work implement from behind the work implement,
the operation unit includes a floor panel that forms a floor surface of the operation unit, and
a check bore is formed in the floor panel, the check bore being configured to allow visually confirming, from the operation unit, an interconnection portion between the link mechanism and the work implement by the attachment/detachment mechanism.

With this configuration, when the link mechanism is connected to the work implement, the operator can visually confirm, through the check bore, the connection of the work implement to the link mechanism, while performing a forward rideover travel operation in the operation unit. As a result, the operator can readily check, from the operation unit, the attachment of the work implement to the passenger work vehicle, and the operator does not need to leave the work vehicle for the checking.

More preferable configurations are proposed as under.

According to one preferred embodiment, the operation unit includes an operation pedal; a through-hole is formed in the floor panel to extend an arm portion of the operation pedal therethrough; and the check bore is formed in the through-hole in a periphery of the arm portion.

With the configuration, the through-hole for the operation pedal is also used as the check bore. Accordingly, the number of through-holes to be formed in the floor panel can be reduced. As a result, the attachment of the work implement to the passenger work vehicle can be readily checked from the operation unit, while making the floor panel advantageous in terms of manufacturing, strength and the like.

According to one preferred embodiment, the attachment/detachment mechanism includes an engaged element arranged in an upper face of the work implement, and an engaging element that is engaged with the engaged element through the forward rideover travel; and the engaging element is arranged in the link mechanism at a position that can be visually confirmed through the check bore from the operation unit.

With the configuration, when the link mechanism is connected to the work implement, the operator can visually confirm, through the check bore, the position of the engaging element relative to the engaged element of the work implement, while performing the forward rideover travel operation in the operation unit. Thus, the operator can readily position the engaging element relative to the engaged element of the work implement during the forward rideover travel, and can readily engage the engaging element of the link mechanism with the engaged element of the work implement. As a result, the operator can readily attach the work implement to the passenger work vehicle through the forward rideover travel.

### (3) Other features and advantageous effects achieved thereby will become apparent by reading the following descriptions with reference to the attached drawings.

For example, it is conceivable that a work vehicle having the following configuration is also preferable.

A work vehicle comprising:
a cover supported by an outer face of a fender;
a groove portion formed in the fender; and
an engaging portion provided in a state of protruding from the cover, the engaging portion engaging with the groove portion.

A configuration of the work vehicle is also preferable in which a plurality of the groove portions are formed in the fender, a plurality of the engaging portions are provided in a state of protruding from the cover, and each of the engaging portions engages with a corresponding one of the groove portions.

A configuration in which the engaging portion is provided in a state of protruding from a peripheral portion of the cover is also preferable.

A configuration is also preferable in which the engaging portion is provided in a state of protruding from a peripheral portion of a front portion of the cover, the front portion of the cover is supported by the outer face of the fender via the engaging portion and the groove portion, and a rear portion of the cover is fastened to the fender with a bolt.

A configuration is also preferable in which the engaging portion has a central portion that extends from the cover and passes through the groove portion, and a protruding portion that protrudes in a direction perpendicular to a direction in which the central portion extends, from an extension end portion of the central portion.

A configuration is also preferable in which the engaging portion is provided in a state of protruding from the peripheral portion of the cover, and the shape of the protruding portion fits the shape of an inner face of the fender in a state where the central portion passes through the groove portion and where the cover is lifted.

### BRIEF DESCRIPTION OF THE DRAWINGS

Fig. 1 is a left side view of a tractor serving as a work vehicle, according to a first embodiment (which also applies to Figs. 2 to 12);
Fig. 2 is a plan view of the tractor;
Fig. 3 is a rear view of the tractor;
Fig. 4 is a left side view showing the inside of an engine room in a prime mover unit;
Fig. 5 is a vertical cross-sectional side view of a dashboard and a partition wall member;
Fig. 6 is an exploded perspective view showing a configuration of the partition wall member below the dashboard;
Fig. 7 is a horizontal cross-sectional view showing the partition wall member;
Fig. 8 is an illustrative view of the partition wall member seen in a plan view;
Fig. 9 is a lower view showing an unlocking portion of a hood;
Fig. 10 is an illustrative view showing an engine revolution number restriction mechanism;
Fig. 11 is a plan view showing a sound-proof cover in an operation unit;
Fig. 12 is a left side view showing the inside of an engine room in a prime mover unit according to a variation;
Fig. 13 is a left side view of a passenger mowing machine serving as a work vehicle, according to a second embodiment (which also applies to Figs. 14 to 25);
Fig. 14 is a plan view of the passenger mowing machine;
Fig. 15 is a schematic left side view of the passenger mowing machine, showing a state immediately before a first link mechanism is connected to a mower unit by an attachment/detachment mechanism;
Fig. 16 is a schematic left side view of the passenger mowing machine, showing a state where the first link mechanism has been connected to the mower unit by the attachment/detachment mechanism;
Fig. 17 is a plan view of the first link mechanism showing a configuration of the first link mechanism and a configuration of a first engaging element and a second engaging element in the attachment/detachment mechanism;
Fig. 18 is a perspective view of the first link mechanism showing a configuration of the first link mechanism and a configuration of the first engaging element and the second engaging element in the attachment/detachment mechanism;
Fig. 19 is an exploded perspective view of the first link mechanism showing a configuration of the first link mechanism and a configuration of the first engaging element and the second engaging element in the attachment/detachment mechanism;
Fig. 20 is a perspective view of the mower unit showing a configuration of the mower unit and a configuration of a first engaged element and a second engaged element in the attachment/detachment mechanism;
Fig. 21 is a plan view of the mower unit showing a configuration of the mower unit and a configuration of the first engaged element and the second engaged element in the attachment/detachment mechanism;
Fig. 22 is a plan view of a main portion, showing a state immediately before a second universal joint on the tractor side is joined to an input shaft on the mower unit side, with the first link mechanism connected to the mower unit by the attachment/detachment mechanism;
Fig. 23 is a plan view of the main portion, showing a state where the second universal joint on the tractor side has been connected to the input shaft on the mower unit side, with the first link mechanism connected to the mower unit by the attachment/detachment mechanism;
Fig. 24 is a plan view of a region around a check bore, showing a state where, immediately before the first link mechanism is connected to the mower unit by the attachment/detachment mechanism, the connection state is visually confirmed through the check bore from the operation unit;
Fig. 25 is a plan view of a region around the check bore, showing a state where, after the first link mechanism has been connected to the mower unit by the attachment/detachment mechanism, the connection state is visually confirmed through the check bore from the operation unit;
Fig. 26 is a side view of a tractor serving as a work vehicle, according to a third embodiment (which also applies to Figs. 27 to 34);
Fig. 27 is a plan view of the tractor;
Fig. 28 shows a configuration of a right cover;
Fig. 29 shows a configuration of engaging portions;
Fig. 30 shows a configuration of the engaging portions and groove portions;
Fig. 31 is a vertical cross-sectional side view showing a configuration of a protruding portion;
Fig. 32 is a perspective view showing an assembly structure of the right cover;
Fig. 33 is a perspective view showing a configuration of a neutral detection mechanism; and
Fig. 34 is a plan view showing a configuration of the neutral detection mechanism.

### DETAILED DESCRIPTION OF PREFERRED EMBODIMENTS

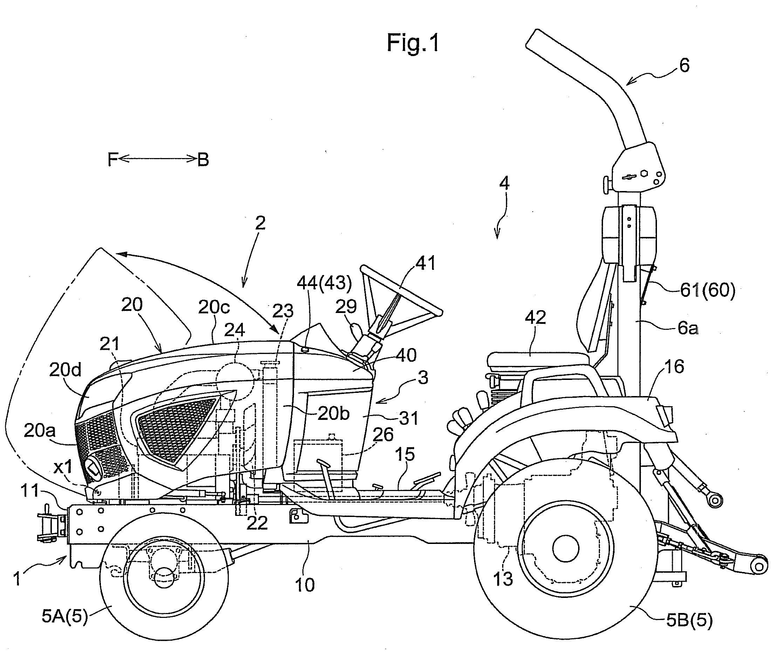

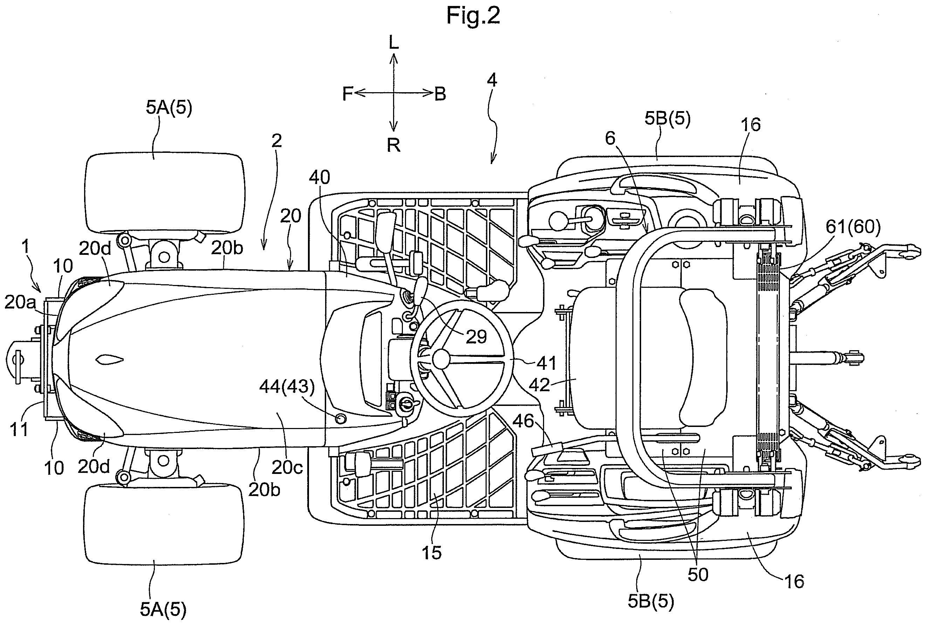

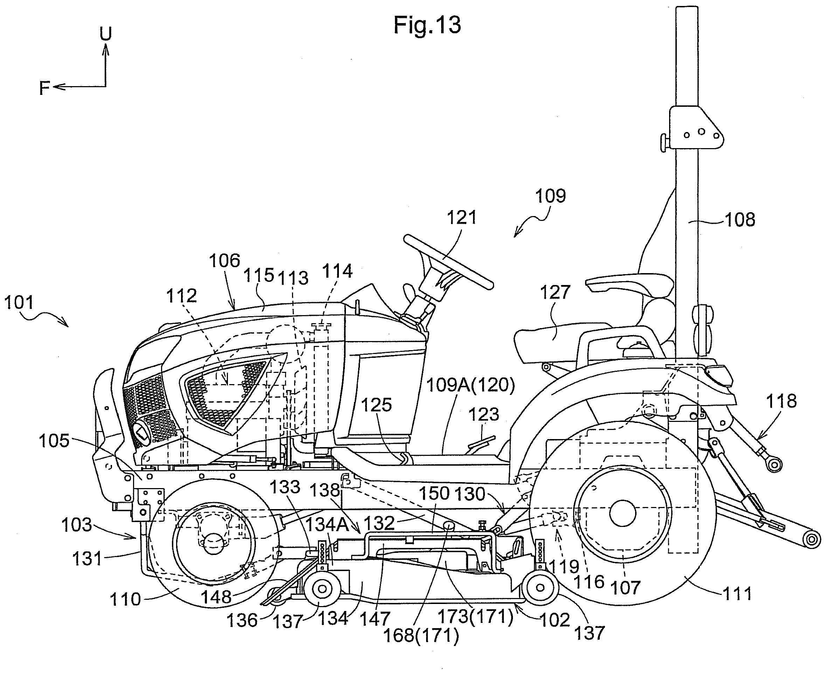

Hereinafter, the front-rear direction, left-right direction, and up-down direction will be described as follows, unless otherwise stated. "Front" refers to the direction (see an arrow F in Figs. 1 and 2) in which a tractor (an example of a work vehicle) shown in Figs. 1 and 2 travels forward during working travel, "rear" refers to the direction (see an arrow B in Figs. 1 and 2) in which the tractor travels rearward, "right" refers to the direction (see an arrow R in Fig. 2) corresponding to the right side when oriented forward relative to this front-rear direction, and "left" refers to the direction (see an arrow L in Fig. 2) corresponding to the left side relative thereto. "Upper/above" refers to the direction indicated by an arrow U with respect to a passenger mowing machine (an example of a work vehicle) shown in Fig. 13, and "lower/below" refers to the opposite direction.

### FIRST EMBODIMENT

### Overall configuration

The tractor, which is an example of a work vehicle described in this embodiment, is configured as follows.

As shown in Figs. 1 and 2, the tractor described as an example in this embodiment includes a vehicle body frame 1, which forms a framework of a vehicle body, a prime mover unit 2, which is supported on the front side of the vehicle body frame 1, a passenger-type operation unit 4, which is located on the rear side of the vehicle body frame 1, left-right traveling apparatus 5, a protection frame 6, which is connected to a rear end portion of the vehicle body frame 1, and so on.

The left-right traveling apparatus 5 is of a four-wheel driven traveling apparatus that includes left and right front wheels 5A, which are steerable and are driven by power from the prime mover unit 2, and left and right rear wheels 5B, which are driven by power from the prime mover unit 2.

As shown in Figs. 1 to 4, the vehicle body frame 1 includes a pair of left and right side members 10, which are made of steel plate and extend in the front-rear direction, and a front member 11, which is made of a steel plate and extends so as to span front ends of the left and right side members 10.

A center pillar 12 is provided so as to span the left and right side members 10 at a substantially central position, in the front-rear direction, on the left and right side members 10. A transmission 13, which transmits power of an engine 21, which is provided in the prime mover unit 2, to the left-right traveling apparatus 5 and other members while changing speed, is attached at a position near rear end portions of the left and right side members 10.

In the operation unit 4 provided rearward of the prime mover unit 2, an operator seat 42 is arranged above the transmission 13. An operation unit step 15 for allowing an operator to board is provided to have a width within the width of a gap between the operator seat 42 and the prime mover unit 2 in the front-rear direction, and rear-wheel fenders 16 are provided on left and right sides of the operator seat 42.

A dashboard 40 is provided in a region rearward of a hood 20 of the prime mover unit 2. This dashboard 40 is provided with a steering wheel 41 for steering the front wheels, and instruments for displaying the engine speed and the like, and functions as a member that constitutes a portion of the operation unit 4.

A later-described partition wall member 3 is provided between a lower portion of the aforementioned dashboard 40 and the operation unit step 15.

Accordingly, the dashboard 40 is used as a constituent element of the operation unit 4 equipped with the instruments and the like, and also, at the same time, functions as a member on the prime mover unit 2 side that covers the upper side of the partition wall member 3 and constitutes a portion of an engine room 2A in the prime mover unit 2, together with the partition wall member 3.

### Motor unit

The prime mover unit 2 is configured as follows.

As shown in Figs. 1 to 4, in the prime mover unit 2, the engine room 2A that is covered by the hood 20 is formed forward of the center pillar 12 that is fixed to the left and right side members 10. The dashboard 40 that constitutes a portion of the operation unit 4 is provided above the partition wall member 3, rearward of the center pillar 12. Thus, a space covered by the hood 20 and a space inside of the partition wall member 3 correspond to the engine room 2A, which is an internal space of the prime mover unit 2.

The engine 21, which is constituted by a gasoline engine of a water cooling type that is supported in a vibration-isolating manner in a front portion of the vehicle body frame 1, is provided within the engine room 2A. A cooling fan 22, which is arranged rearward of the engine 21, a radiator 23, which is arranged rearward of the cooling fan 22, an air cleaner 24, which is arranged above the engine 21, a muffler 25, which is located forward of the engine 21, and so on, are also arranged within the engine room 2A.

The hood 20 is of an integrated type, in which a front cover 20a, which covers a front end portion of the prime mover unit 2 and allows ventilation, left and right side covers 20b, which cover lateral side portions of the prime mover unit 2, an upper cover 20c, which covers an upper portion of the prime mover unit 2, a headlight unit 20d, and so on, are integrally connected to one another. This hood 20 is configured to be able to pivot so as to open and close in the up-down direction, with a support shaft xl, which is located in a front end portion of the vehicle body frame 1 and extends in the left-right direction, serving as a fulcrum.

Thus, the hood 20 can pivot up and down between a close position at which the hood 20 covers the prime mover unit 2 and an open position at which the prime mover unit 2 is opened, and is configured to be of a rear-open type in which the rear side of the inside of the hood 20 is greatly opened when the hood 20 is at the open position. As a result, this configuration facilitates maintenance of the radiator 23, the air cleaner 24, and so on that are arranged on the rear side of the prime mover unit 2.

The radiator 23 is provided in a rear end portion within the engine room 2A, and the cooling fan 22 for introducing outside air for bringing outside air into contact with the radiator 23 is provided in the engine room 2A, forward of the radiator 23. Outside air that is supplied to this radiator 23 passes through the partition wall member 3 on the rear side and suctioned and introduced, cools down the radiator 23, the engine 21, and the muffler 25, and is then discharged from a front cover 20a area in a front portion.

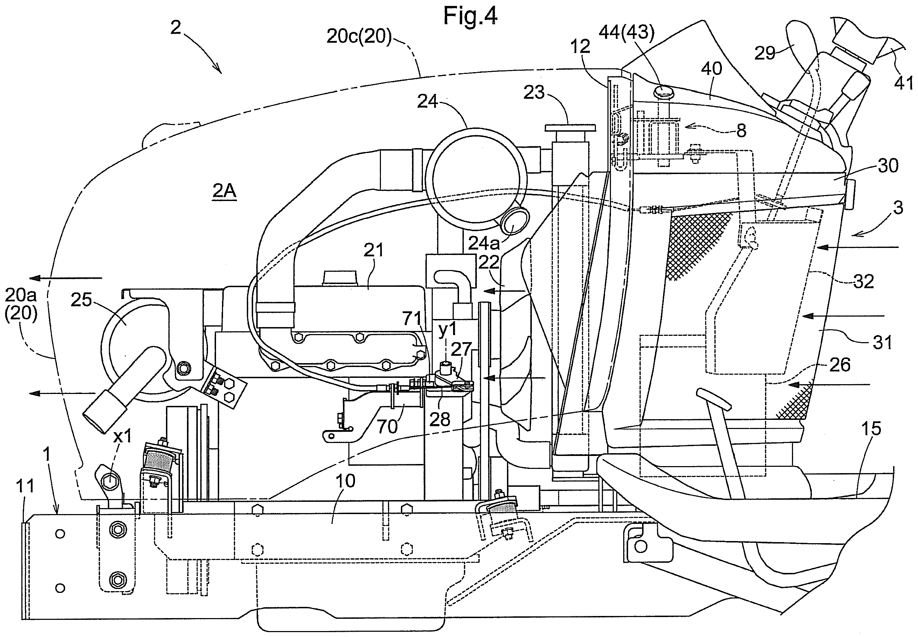

Within the hood 20, an air intake port 24a of the air cleaner 24 is provided so as to be oriented toward the rear side, at a position further on the vehicle body-rear side than the position of the engine 21 and forward of the radiator 23. As shown in Fig. 4, this air intake port 24a is open obliquely downward and rearward, and outside air that has passed through the partition wall member 3 and the radiator 23 is suctioned from the air intake port 24a into the air cleaner 24.

### Partition wall portion

The partition wall member 3 is configured as follows.

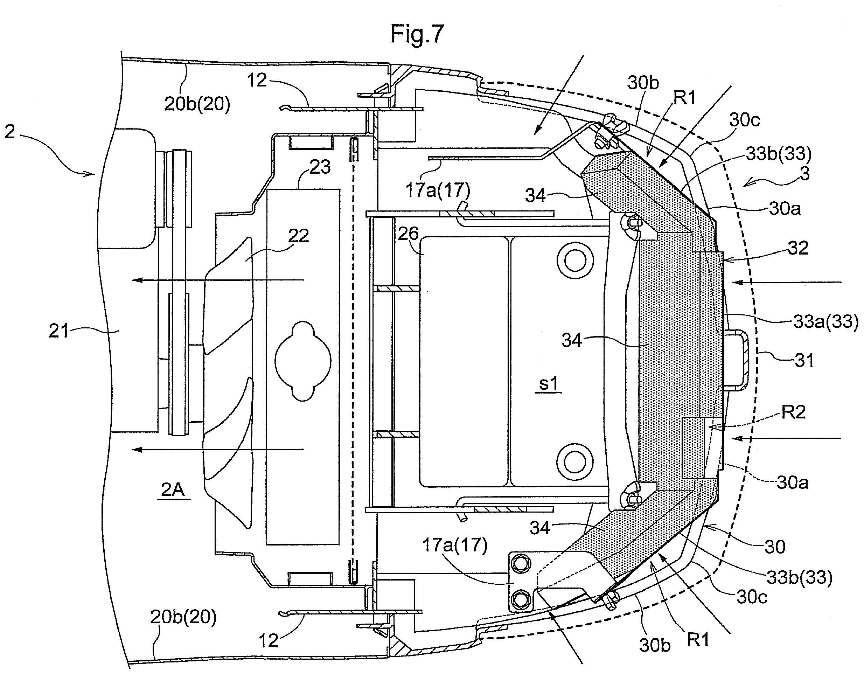

As shown in Figs. 4 to 7, the partition wall member 3 is formed by combining a main frame portion 30, which is formed into a lattice shape, an outer wall plate 31, which includes a plurality of ventilation holes and is provided on a rear face side of the main frame portion 30, and a sound-proof wall plate 32, which is provided in a front face side of the main frame portion 30.

This partition wall member 3 is provided above the operation unit step 15 and in a region below the dashboard 40. A portion corresponding to an intermediate portion, in the left-right direction, of the partition wall member 3 protrudes rearward, and is formed into substantially a gate shape when seen in a plan view. A space s1 on the inner peripheral side of the partition wall member 3, which has the gate shape when seen in a plan view, is used as a space for accommodating a battery 26.

The main frame portion 30 and the outer wall plate 31 is provided so as to span the lower portion of the dashboard 40 and the operation unit step 15 when seen in the up-down direction, and are configured to be able to be attached to and detached from the dashboard 40 and the operation unit step 15.

The main frame portion 30 includes side face portions 30b, which extend obliquely rearward from both end portions in the left-right direction toward the central side in the left-right direction, and a rear end face portion 30a, which is connected to rear end portions of these side face portions 30b, and is formed into a gate shape when seen in the aforementioned plan view. The outer wall plate 31 opposes the rear face side of the main frame portion 30, and is formed into a gate shape, which is the same shape as the rear face of the main frame portion 30, when seen in a plan view.

The sound-proof wall plate 32 is provided in an area spanning the lower portion of the dashboard 40 and a region near an upper portion of the battery 26. This sound-proof wall plate 32 includes a sound-insulating plate portion 33, which is made of sheet metals and opposes a front face side of the rear end face portion 30a of the main frame portion 30, and a sound absorbing element 34, which is made of a soft resin and faces the internal space of the hood 20. The sound absorbing element 34 is constituted by a porous sponge material or the like, and is adhered to the sound-insulating plate portion 33.

The sound-insulating plate portion 33 is attached to a dashboard support frame 17, which is provided in an upright manner on the vehicle body frame 1 rearward of the center pillar 12, via an attachment stay 17a in a detachable manner.

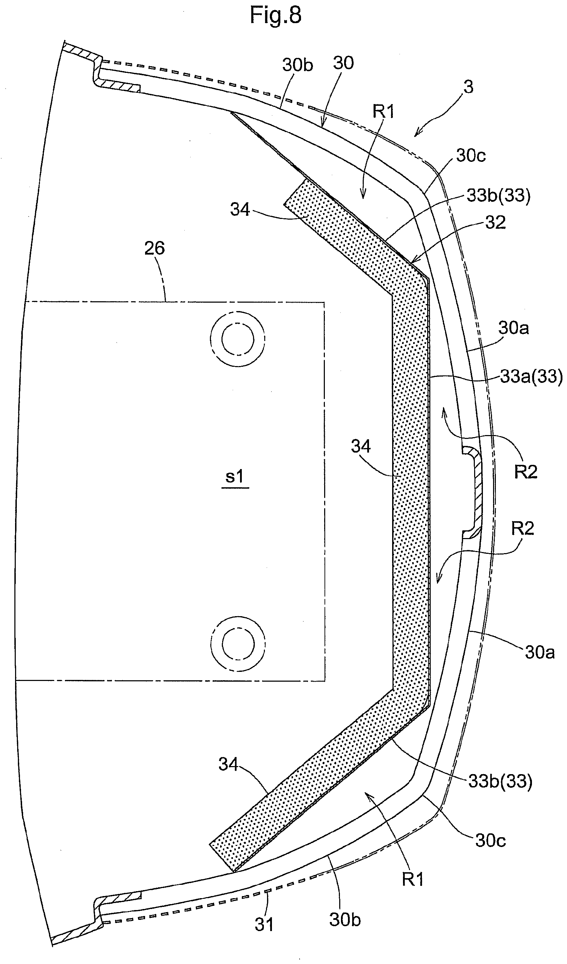

As shown in Figs. 4 and 8, the sound-insulating plate portion 33 includes an intermediate plate portion 33a, which is formed into a flat plate shape and is located at an intermediate portion in the left-right direction when seen in a plan view, and left and right flat plate portions 33b and 33b, which are formed into a flat plate shape and extend from the intermediate plate portion 33a obliquely forward toward the lateral sides, and is formed in a trapezoidal shape that is open on the front side so that its width gradually expands, when seen in a plan view.

This sound-insulating plate portion 33 is formed into a flat face shape that is different from the main frame portion 30, so that air intake passages R1 and R2 are formed between the sound-insulating plate portion 33 and the main frame portion 30 that is located rearward of the sound-insulating plate portion 33 and opposes it.

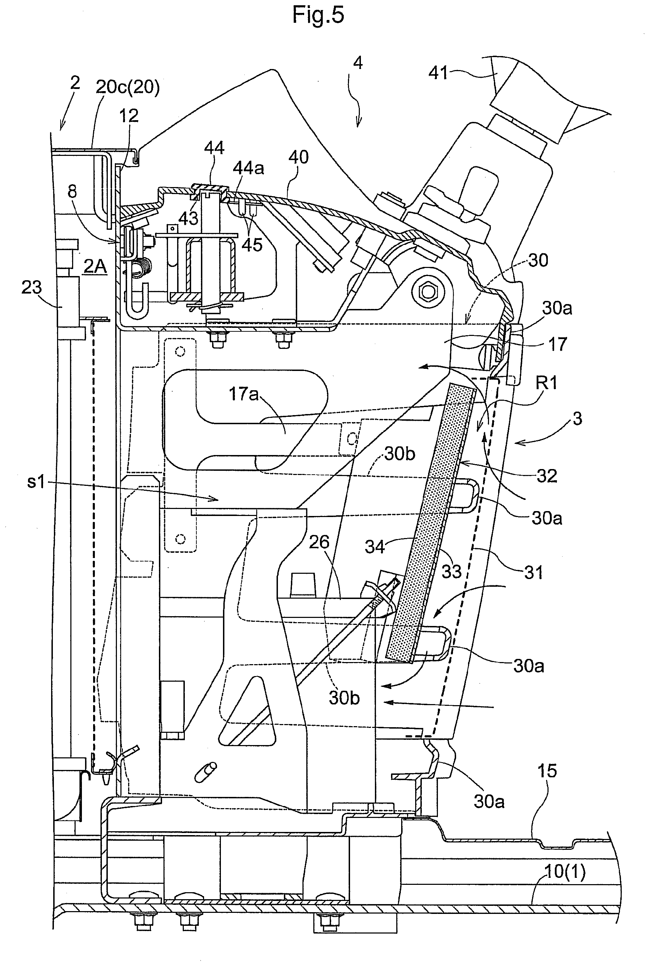

That is to say, as shown in Figs. 5 to 8, the sound-insulating plate portion 33 is installed in a state of swelling rearward when seen in a plan view to oppose the front face side of the main frame portion 30 that curves in a recessed manner on its inner peripheral side, i.e. to oppose the inner peripheral face side thereof. At this time, the left and right flat plate portions 33b and 33b of the sound-insulating plate portion 33 are located so as to straddle corner portions 30c that are formed at portions where the rear end face portion 30a and the side face portions 30b of the main frame portion 30 intersect respectively. As a result, corner air intake passages R1, each having a triangular shape when seen in a plan view, are formed at the portions surrounded by the left and right flat plate portions 33b and 33b and the corner portions 30c.

The rear end face portion 30a of the main frame portion 30 is formed into a curved shape having some degree of curvature, whereas the intermediate plate portion 33a of the sound-insulating plate portion 33 that opposes the rear end face portion 30a has a substantially flat face. With this configuration, a gap is also formed between the intermediate plate portion 33a and the rear end face portion 30a, and a rear air intake passage R2 is formed by this gap.

Thus, as a result of the sound-insulating plate portion 33 being arranged with a gap from the opposing main frame portion 30 and outer wall plate 31, and the air intake passages R1 and R2 being formed therebetween, outside air that is suctioned through the ventilation holes in the outer wall plate 31 due to a suctioning effect of the cooling fan 22 is suctioned through the air intake passages R1 and R2 into the engine room 2A.

The aforementioned sound-insulating plate portion 33 that is made of a sheet metal and the sound absorbing element 34 that is made of a soft resin are provided in an area spanning the lower portion of the dashboard 40 and the region near the upper portion of the battery 26. That is to say, in a region where the dashboard 40 and the battery 26 are present, these dashboard 40 and battery 26 function as sound-insulating members and can suppress leakage of noise generated from the inside of the engine room toward the operation unit 4 side. Meanwhile, with the partition wall member 3 in a portion where the dashboard 40 or the battery 26 is not present, the sound is absorbed or reflected by the sound-proof wall plate 32, and spreading of the noise generated from the inside of the engine room 2A toward the operation unit 4 side can thus be effectively suppressed.

### Engine revolution limiter apparatus

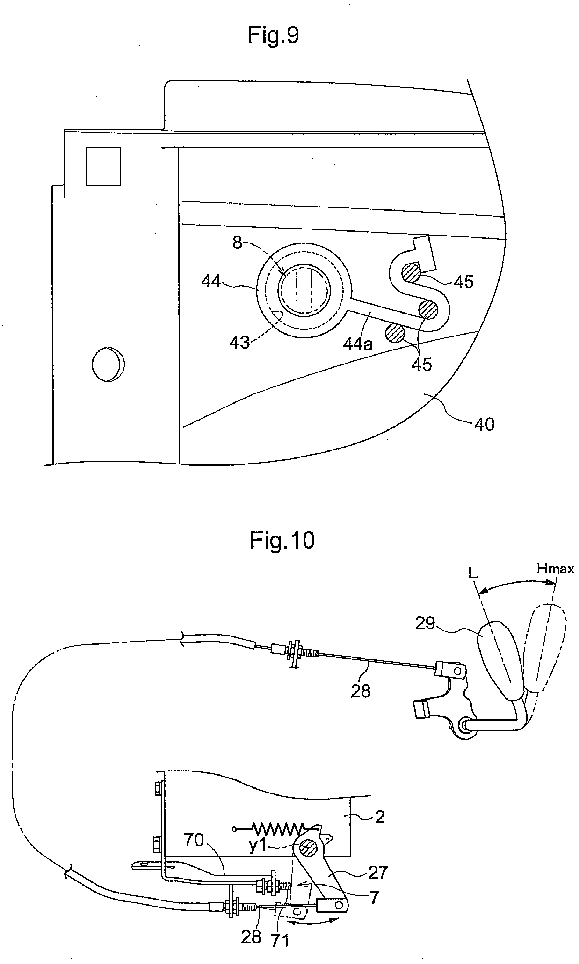

As shown in Figs. 4 and 10, a throttle lever 27 for operating a throttle of the engine 21 is provided at a lateral side position on an engine body of the engine 21. This throttle lever 27 is supported so as to be able to pivot in the horizontal direction around an axis y1 extending in the up-down direction shown in Figs. 4 and 10, and an accelerator wire 28 is connected to a leading end side of the throttle lever 27.

Accordingly, the rotation angle of the throttle lever 27 is changed as a result of the accelerator wire 28 being subjected to a pushing or pulling operation based on an operation made to an accelerator operation tool 29 provided in the operation unit 4, and the number of revolutions of the engine 21 is adjusted.

A maximum speed limiter mechanism 7, (which corresponds to an engine revolution limiter apparatus) which adjusts a maximum operation range within which the throttle lever 27 can be operated toward a high-speed operation side, is provided in a desired state in an area within which the throttle lever 27 is operated. The maximum speed limiter mechanism 7 includes a bracket portion 70, which is provided at a lateral side position on the engine body and supports the accelerator wire 28, and a speed adjustment bolt 71, which is attached to this bracket portion 70.

This maximum speed limiter mechanism 7 can be switched between a state where a portion of the speed adjustment bolt 71 limits the adjustment range of the rotation angle of the throttle lever 27 and the number of revolutions of the engine is limited to a predetermined range, and a state where this restriction is canceled, by changing the state of attachment of the speed adjustment bolt 71 to the bracket portion 70.

That is to say, the maximum speed position to which operation can be made by the throttle lever 27 can be set by operating the speed adjustment bolt 71 so as to move forward or backward relative to the bracket portion 70, and adjusting the position of the speed adjustment bolt 71 so that a protruding end portion thereof opposes and abuts against an end edge, on the high-speed side, of the throttle lever 27 in an operation range of the throttle lever 27 toward the high-speed side.

### Hood unlocking portion

As shown in Figs. 5, 6, and 9, a lock mechanism 8 for restricting an operation of opening the hood 20 is provided within the dashboard 40 on the left side. This lock mechanism 8 is configured so as to be able to be unlocked by inserting some kind of instrument or some kind of operation tool such as an engine key, which substitutes the instrument, into an opening 43 that is formed in an upper left face of the dashboard 40 to perform a rotating operation.

The opening 43 is usually closed by a plug member 44, which is made of a soft resin or the like, since rain water or dust may enter if the opening is always in an open state. However, since the plug member 44 is likely to be lost when it is solely used, the present invention employs the following configuration.

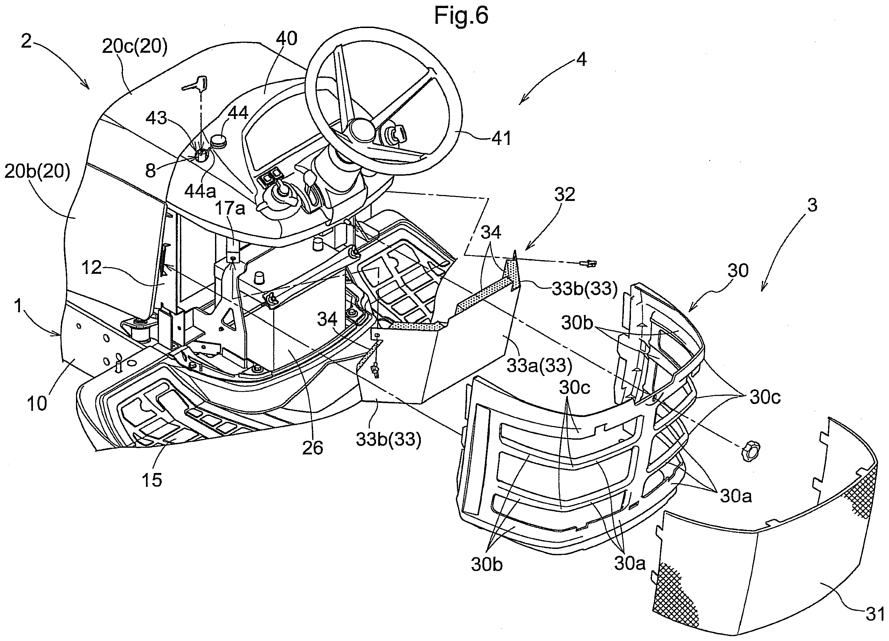

As shown in Figs. 6 and 9, a flexible string portion 44a, which can be elastically deformed, is extended from the plug member 44, and a plurality of protruding portions 45, around which the string portion 44 can be wound, are provided around the opening 43 of the dashboard 40.

Accordingly, by passing the string portion 44a through the opening 43 and winding the string portion 44a around the plurality of protruding portions 45 that protrude on a back face side of the dashboard 40, the plug member 44 can be used while switching between a closed state in which the plug member 44 is inserted into the opening 43 of the dashboard 40 and an open state where the plug member 44 has been pulled out of the opening 43 and is positioned on the upper face side of the dashboard 40. In either case, the string portion 44a of the plug member 44 can be used in a state of being wound around the protruding portions 45.

### Sound insulation below operation unit

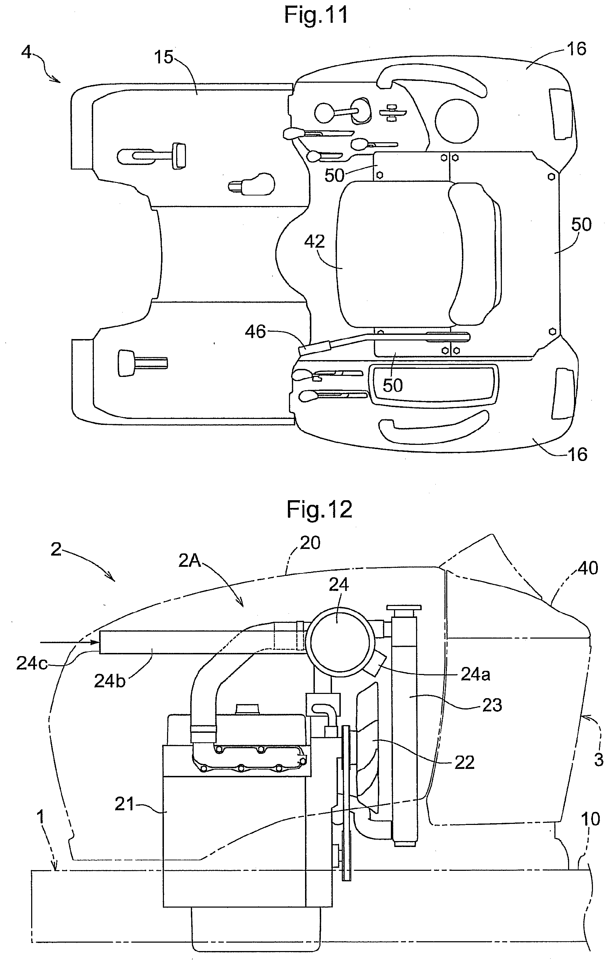

As shown in Fig. 11, the operator seat 42 is installed above the transmission 13 via a seat support apparatus (not shown).

Although a rubber sheet (not shown) is spread, for example, above the transmission 13 for sound insulation, operation members such as a handbrake 46 are provided above the transmission 13 in lateral side portions of the operator seat 42. For this reason, holes and cutout portions for allowing these operation members to pass therethrough need to be formed in the seat, and it has been difficult to achieve a sufficient sound-insulating effect.

In this invention, a sound-proof cover 50 is provided above the transmission 13, between the operator seat 42 and the left and right rear-wheel fenders 16. This sound-proof cover 50 is formed by adhering a sound absorbing element to a lower face side of an upper cover that is made of a sheet metal. The sound-proof cover 50 is constituted by two members that are divided into front and rear parts around an intermediate portion, in the front-rear direction, of the operator seat 42. Accordingly, the sound-proof cover 50 is configured so that it can be readily provided in a peripheral portion of the operator seat 42, so as to enclose the operator seat 42 from both the front and rear sides.

As a result of thus providing the aforementioned sound-proof cover 50 separately from the rubber sheet that is spread above the transmission 13, even if holes and cutout portions for allowing the operation members to pass therethrough are formed in the seat, the positions of the holes and cutout portions formed in the sound-proof cover 50 are slightly shifted, making it easy to reduce sound leakage through the holes and cutout portions.

### Sound insulation behind operation unit

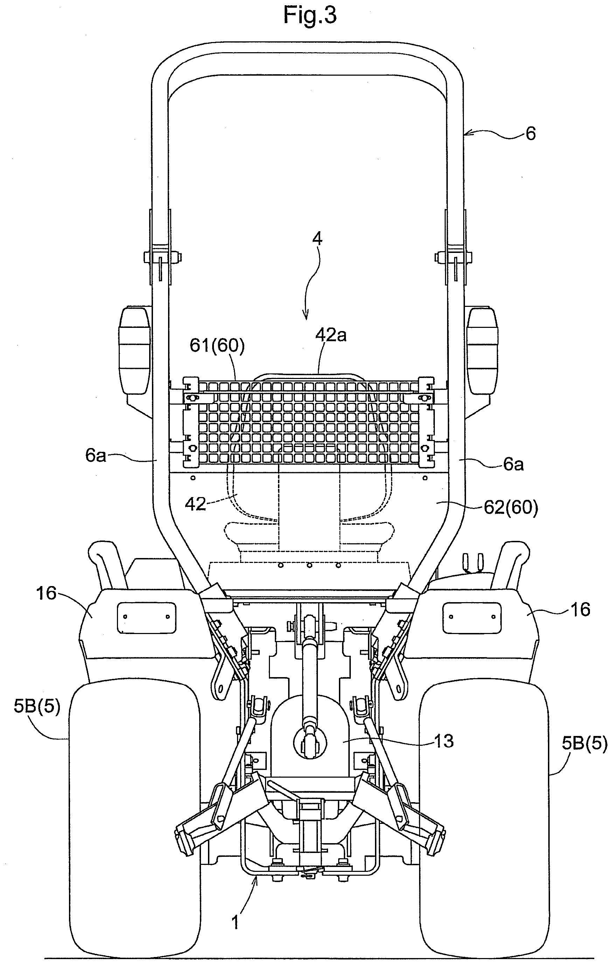

As shown in Figs. 1 and 3, the gate-shaped protection frame 6, which is connected to the rear end portion of the vehicle body frame 1, is provided behind the operator seat 42.

Of this gate-shaped protection frame 6, left and right column portions 6a and 6a are located on the left and right sides behind the operator seat 42. The left and right column portions 6a and 6a bend on their upper end side so as to be integrally continuous with each other, and are formed into a gate shape when seen in the front-rear direction.

A back cover member 60 is attached behind the operator seat 42 so as to span the left and right column portions 6a and 6a. This back cover member 60 includes a resin net 61, which is located in an upper portion, and a sheet-metal plate 62, which is located in a lower portion.

A lower end of the sheet-metal plate 62 on the lower side is located near lower end portions of the left and right column portions 6a and 6a. An upper end of the sheet-metal plate 62 is roughly at a height of an intermediate position, in the up-down direction, on a backrest portion 42 of the operator seat 42. An upper end of the resin net 61 on the upper side, which is attached at a position higher than the sheet-metal plate 62, is attached at a height position similar to that of an upper end portion of the backrest portion 42a of the operator seat 42.

That is to say, the back cover member 60, which is constituted by the sheet-metal plate 62 and the resin net 61, is attached in an upright posture so as to stand near a lower end portion of the protection frame 6 and reach a height position similar to that of the upper end portion of the backrest portion 42a of the operator seat 42.

By thus employing the back cover member 60, the sheet-metal plate 62 of the back cover member 60 is arranged on the lower side near the transmission 13, which is one noise generation source, so as to be brought closer to the lower end portion of the protection frame 6, thereby effectively suppressing sound coming from the lower, transmission 13 side.

Since the resin net 61 through which the rear side can be viewed is attached on the upper side close to the operator seat 42 on which the operator sits, propagation of noise to ears of the operator who sits on the operator seat 42 can be suppressed to some degree while avoiding interruption of the rearward field of view. This configuration is also advantageous.

### Variations of First Embodiment

Variations will be described below, only regarding configurations different from the above embodiment.
[1] The above embodiment has taken, as an example, a structure in which the position of the air intake port 24a of the air cleaner 24 provided within the hood 20 is further on the vehicle body-rear side than the engine 21 and forward of the radiator 23, so that the air intake port 24a of the air cleaner 24 is oriented toward the rear side. However, the present invention is not limited to this structure.
   For example, as shown in Fig. 12, a configuration may also be employed in which an air intake pipe 24b, which is led out forward of the air cleaner 24, is provided near a front grille that is located further on the vehicle body-front side than the engine 21, in addition to the structure in which the aforementioned air intake port 24a is provided further on the vehicle body-rear side than the engine 21 so as to be oriented toward the rear side, and outside air is introduced from the vehicle body-front side via a front air intake port 24c that is provided at a front end portion of the air intake pipe 24b.
   By thus providing both air intake structures, namely the air intake port 24a of the air cleaner 24 that is provided further on the vehicle body-rear side than the engine 21 so as to be oriented toward the rear side and the front air intake port 24c near the front grille 2B that is forward of the engine 21, a sufficient amount of air to be suctioned by the air cleaner 24 can be readily secured.
[2] The above embodiment has taken, as an example, a structure of the partition wall member 3 in which the main frame portion 30 that is formed into a lattice shape, the outer wall plate 31 that includes a plurality of ventilation holes and is provided on the rear face side of the main frame portion 30, and the sound-proof wall plate 32 that is provided on the front face side of the main frame portion 30 are combined. However, the present invention is not limited to this structure.
   For example, a structure may also be employed in which the main frame portion 30 and the outer wall plate 31 are integrally configured, or where the main frame portion 30 and the sound-proof wall plate 32 that is provided on the front face side thereof are integrally configured, or where the main frame portion 30, the outer wall plate 31, and the sound-proof wall plate 32 are integrally configured. However, these members need to be provided in a state where the ventilation holes in the outer wall plate 31 and the air intake passages R1 and R2 between the main frame portion 30 and the sound-proof wall plate 32 are secured.
[3] The above embodiment has taken, as an example, a structure in which the battery 26 is provided within the space that is surrounded on its rear side by the partition wall member 3, and the sound-proof wall plate 32 is provided between the upper portion of the battery 26 and the lower portion of the dashboard 40. However, the present invention is not limited to this structure.
   For example, a structure may also be employed in which the battery 26 is not provided, and a tool box having a similar size is provided, or neither the battery 26 nor other devices such as a tool box is provided. In this case, the sound-proof wall plate 32 may be provided so as to expand over the entire area between the lower portion of the dashboard 40 and the operation unit step 15.
   As for the other configuration, the same configuration as the above embodiment may be employed.
[4] In the above embodiment, the back cover member 60, which spans the left and right column portions 6a and 6a, is attached to the gate-shaped protection frame 6 that is provided behind the operator seat 42. A structure in which this back cover member 60 is configured by combining the resin net 61 located in the upper portion and the sheet-metal plate 62 located in the lower portion has been taken as an example. However, the present invention is not limited to this structure.
   For example, the entire back cover member 60 may also be constituted by the sheet-metal plate 62, or may also be made of an appropriate material having some degree of sound insulation effect, such as a resin plate. Furthermore, the height position at which the back cover member 60 is installed is not limited to a height position from near the lower end portion of the protection frame 6 to a height position similar to that of the upper end portion of the backrest portion 42a of the operator seat 42. For example, the height position of the lower end portion of the back cover member 60 may also be set at a position higher than the lower end portion of the protection frame 6, or the height position of the upper end portion of the back cover member 60 may also be set at a position higher than the upper end portion of the backrest portion 42a.
[5] The above embodiment has taken, as an example, a structure in which a gasoline engine of a water cooling type is employed as the engine 21 installed in the prime mover unit 2. However, the present invention is not limited to this structure. For example, a gasoline engine of an air cooling type may also be employed as the engine 21. A structure in which a diesel engine is employed rather than a gasoline engine, or a structure in which an exhaust treatment apparatus having a DPF (diesel particulate filter) is provided may also be employed.
   Furthermore, the prime mover unit 2 may also be of a hybrid type that includes the engine 21 and an electric motor.
[6] Although the above embodiment has taken a tractor as an example of a work vehicle, the present invention is not limited thereto. The present invention is applicable to agricultural work vehicles such as a tractor, a front loader, a mowing machine, and a rice planting machine, civil engineering work vehicles such as a wheel loader, and transportation vehicles such as a forklift.

### SECOND EMBODIMENT

### Overall configuration

As shown in Figs. 13 to 16, a passenger mowing machine that is described as an example in this embodiment includes a tractor 101, which is a passenger-type traveling vehicle body, a mid-mount mower unit 102 (an example of a work implement), which is arranged in a lower body portion of the tractor 101, a first link mechanism 103 for supporting the mower unit 102 so as to be able to be lifted and lowered, an attachment/detachment mechanism 104 for allowing the mower unit 102 to be attached to and detached from the first link mechanism 103, and so on.

The tractor 101 includes a vehicle body frame 105, which forms a framework thereof, a prime mover unit 106, which is supported on a front side of the vehicle body frame 105, a speed change unit 107, which is supported on a rear side of the vehicle body frame 105, a protection frame 108, which is connected to a rear end portion of the vehicle body frame 105, a passenger-type operation unit 109, which is formed in an area protected by the protection frame 108, left and right front wheels 110, which can be driven and steered, left and right rear wheels 111, which can be driven, and so on. The tractor 101 has an arrangement space in which the mower unit 102 is arranged so as to be able to be lifted and lowered, in its lower body portion between the left and right front wheels 110 and the left and right rear wheels 111.

The prime mover unit 106 includes an engine 112 of a water cooling type, which is supported in a vibration-isolating manner in a front portion of the vehicle body frame 105, a cooling fan 113, which is arranged behind the engine 112, a radiator 114, which is arranged behind the cooling fan 113, a hood 115 for covering these members, and so on.

Although not shown in the diagrams, the speed change unit 107 includes a hydrostatic continuously variable transmission apparatus (hereinafter, "HST") for subjecting rotary power from the engine 112 to speed change, and the like, and supplies rotary power after subjected to the speed change as power for traveling to the left and right front wheels 110 and the left and right rear wheels 111.

As shown in Figs. 13 to 16, the speed change unit 107 includes, as output shafts for taking operational power, a first PTO shaft 116, which protrudes forward from a front end lower portion of the speed change unit 107, and a second PTO shaft 117, which protrudes rearward from a rear end lower portion of the speed change unit 107. A second link mechanism 118 for supporting a rear-mount work implement (not shown), such as a rotary cultivation machine that is to be arranged behind the tractor 101, is provided in the rear side of the speed change unit 107. An external transmission mechanism 119 for transmitting operational rotary power taken from the first PTO shaft 116 to the mower unit 102 is joined to the first PTO shaft 116. The external transmission mechanism 119 includes a first universal joint 119A, which is fitted, using splines, to the first PTO shaft 116, a transmission shaft 119B, which is stretchable and extends forward from the first universal joint 119A, a second universal joint 119C, which is connected to a front end portion of the transmission shaft 119B, and so on.

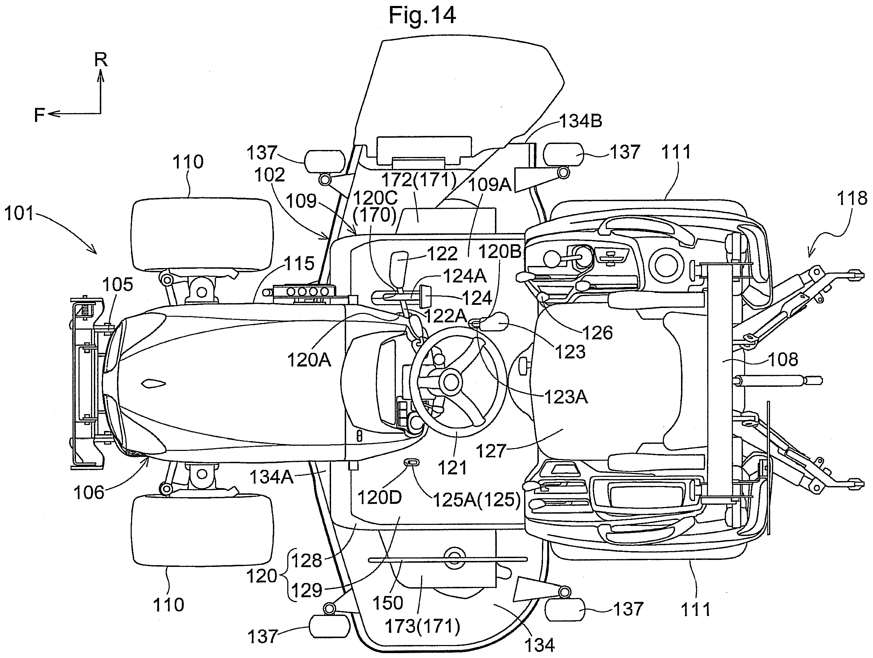

As shown in Figs. 13 and 14, the operation unit 109 includes a floor panel 120, which forms its floor surface 109A, a steering wheel 121 for steering the front wheels, a forward speed change pedal 122 and a reverse speed change pedal 123, which are linked to a trunnion shaft of the HST, a brake pedal 124, which is linked to a brake apparatus (not shown), a parking pedal 125, which engages with and holds the brake pedal 124 at a braking position, a lifting lever 126 for the work implement, an operator seat 127 arranged above the speed change unit 107, and so on. The floor panel 120 includes a base plate 128, which is made of a steel plate and is supported by the vehicle body frame 105, a rubber mat 129, which is spread over an upper face of the base plate 128, and so on.

Although not shown in the diagrams, the lifting lever 126 operates in conjunction with a lifting valve unit via a linkage mechanism for lifting and lowering operations. The valve unit controls a flow of oil through a hydraulic lift cylinder that is provided within the speed change unit 107, based on a position to which the lifting lever 126 is operated. This control causes the lift cylinder to perform extending and retracting operations to lift and lower the second link mechanism 118.

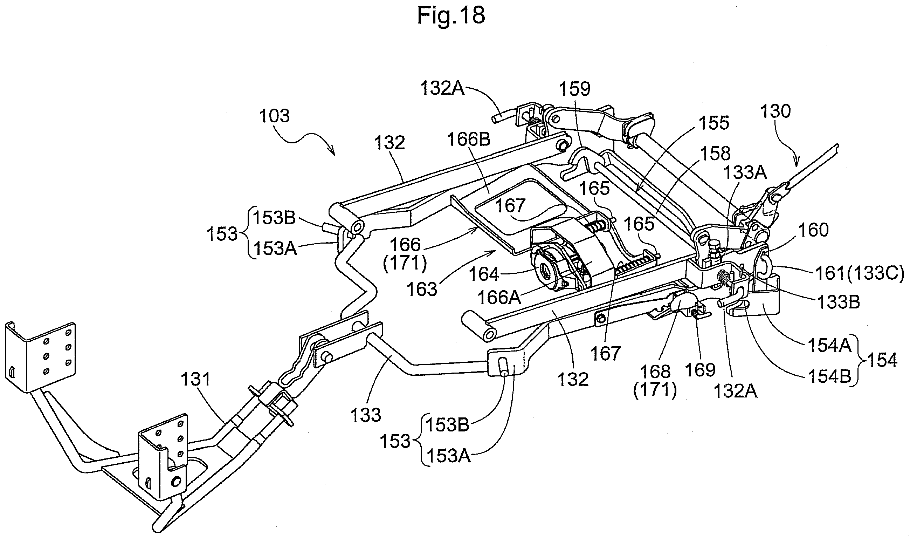

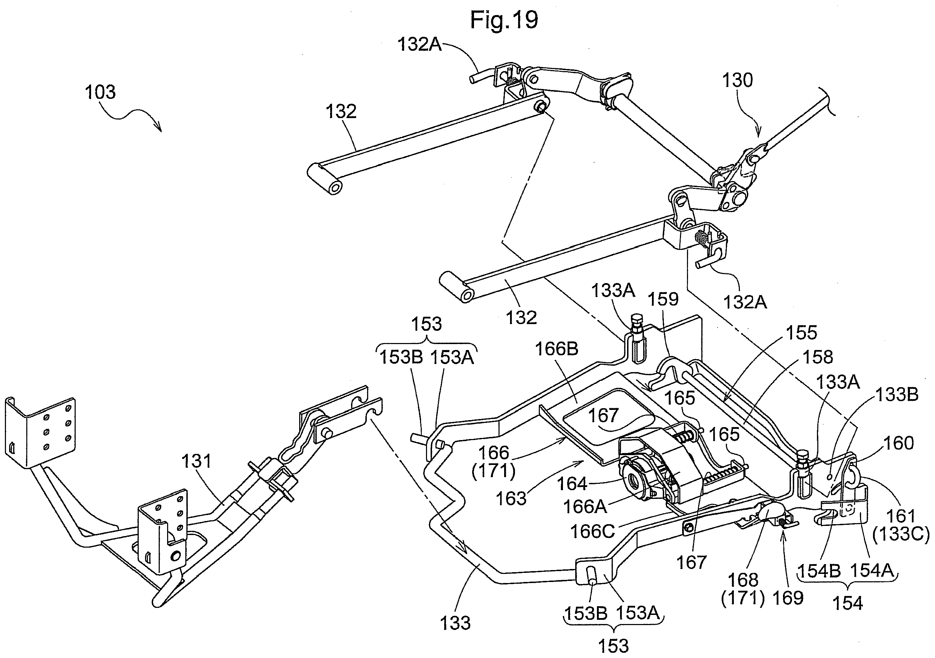

As shown in Figs. 13 and 17 to 19, the second link mechanism 118 is connected to the first link mechanism 103, so as to operate in conjunction therewith, via an interlocking mechanism 130 so that the first link mechanism 103 is driven to be lifted and lowered in conjunction with lifting and lowering pivot of the second link mechanism 118.

With the above configuration, the operator can operate the lifting lever 126 to lift and lower the mower unit 102, which is supported by the first link mechanism 103, through the extending and retracting operation of the lift cylinder between an operational position at which the mower unit 102 comes into contact with the ground and an upper-limit withdrawal position.

As shown in Figs. 13, 15 to 19, 22 and 23, the first link mechanism 103 includes a front link 131, which is supported on a front end side of the vehicle body frame 105 so as to be able to pivot up and down, left and right rear links 132, which are supported on an intermediate side, in the front-rear direction, of the vehicle body frame 105 so as to be able to pivot up and down, a support frame 133, which spans a free end portion of the front link 131 and free end portions of the rear links 132, and so on. The free end portion of the front link 131 functions as a hook that engages with a front end portion of the support frame 133. The free end portion of each rear link 132 is provided with a connecting portion 132A of a pin-connection type that is connected to a connected portion 133A that is provided in a rear portion of the support frame 133.

### Mower unit

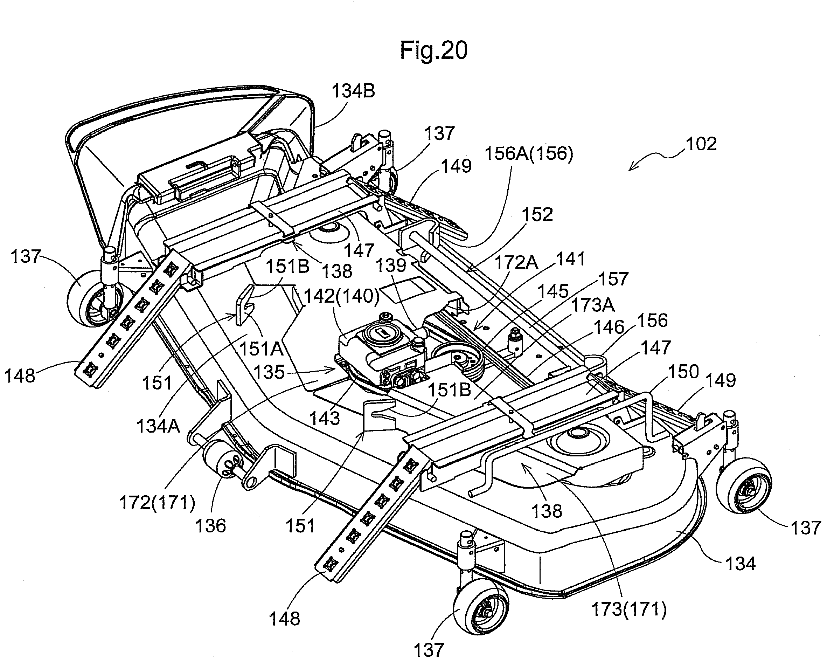

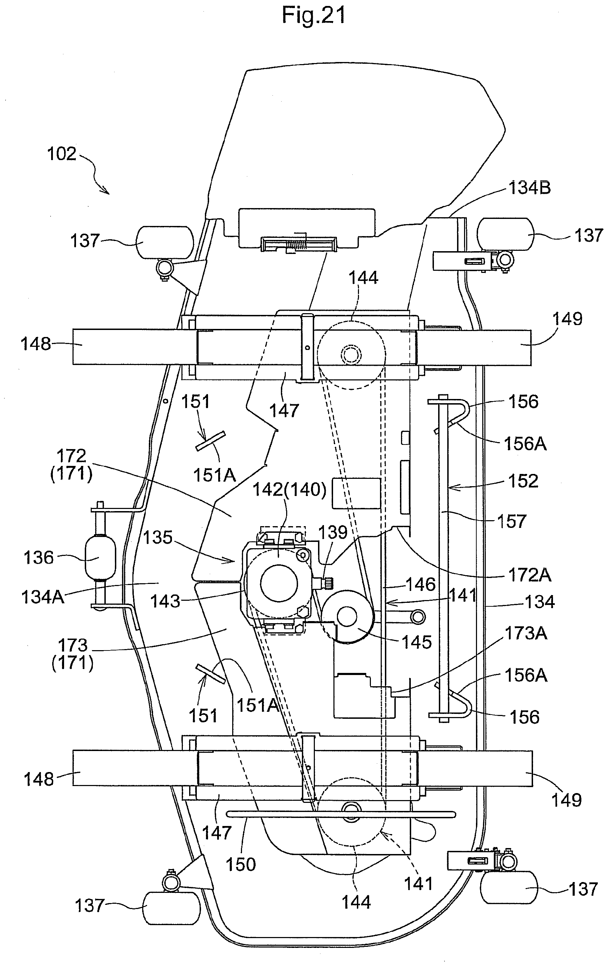

As shown in Figs. 13 to 16 and 20 to 23, the mower unit 102 includes three bar blades (not shown), which are arranged in a line in the left-right direction so as to rotate around respective vertical axes, a mower deck 134 for covering the three bar blades from above, a power distribution mechanism 135 for supplying rotary power from the first PTO shaft 116 to the bar blades, a rideover roller 136, which is arranged in a central region, in the left-right direction, of a front end portion of the mower deck 134, left and right gauge rings 137, which are arranged at both ends in the front and rear of the mower deck 134, left and right passage forming mechanisms 138, which form front-wheel rideover passages for the mower unit 102, and the like.

Although not shown in the diagrams, the bar blades are driven to rotate clockwise when seen in a plan view, by power from the power distribution mechanism 135. Blowing wings for generating transporting wind due to rotation of the bar blades are formed at both ends of the respective bar blades.

As shown in Figs. 13, 14 and 20 to 23, the mower deck 134 includes a raised portion 134A that is raised upward, extending in the left-right direction of the mower deck 134 in a region on a front end side thereof. Thus, in the mower deck 134, a guiding passage for guiding mown grass transported by the transporting wind toward a right end portion of the mower deck 134 is formed on the front end side of an upper portion of the internal space. A discharging portion 134B for discharging mown grass guided through the guiding passage to the outside is provided at the right end portion of the mower deck 134.

### Power distribution mechanism

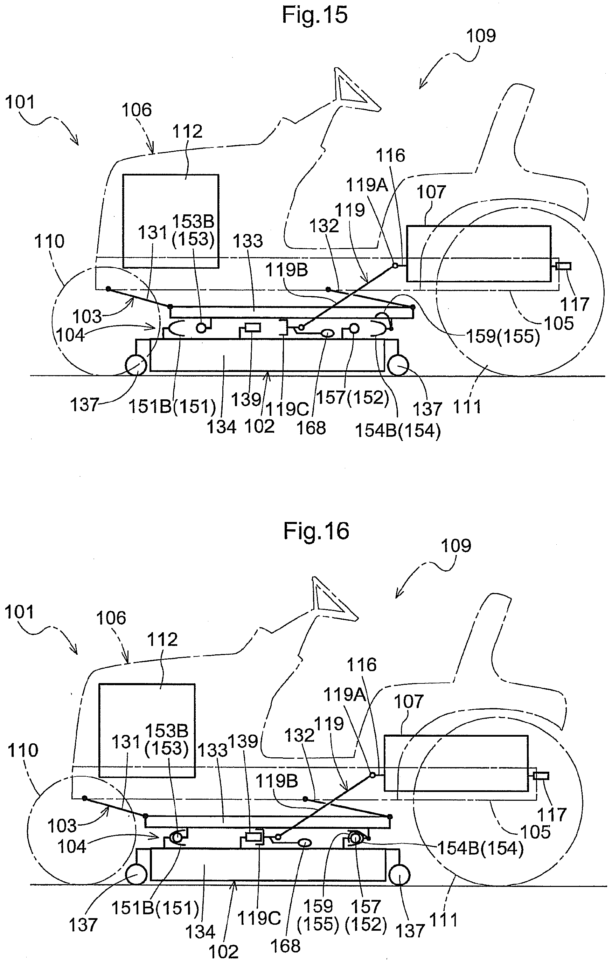

As shown in Figs. 15, 16 and 20 to 23, the power distribution mechanism 135 is arranged in an area rearward of the raised portion 134A in the upper face of the mower deck 134. The power distribution mechanism 135 includes an input shaft 139, which extends in the front-rear direction and to which rotary power from the first PTO shaft 116 is input via the external transmission mechanism 119, a first transmission unit 140 of a bevel gear type, which converts rotary power from the input shaft 139 to rotary power around a vertical axis, a second transmission unit 141 of a belt type, which transmits rotary power around the vertical axis output from the first transmission unit 140 to the bar blades, and so on. The first transmission unit 140 includes a pair of bevel gears (not shown) and so on within a transmission case 142, which supports the input shaft 139 and so on, and is arranged at a central portion, in the left-right direction, of the mower deck 134. The second transmission unit 141 includes an input pulley 143, to which the rotary power from the first transmission unit 140 is input, and which integrally rotates with the left, right, and central bar blades, left and right output pulleys 144, which integrally rotate with the left and right bar blades, a tension pulley 145, which is arranged rearward of the left side of the first transmission unit 140, an endless rotary belt 146, which is wound around these pulleys 143 to 145, and so on.

As shown in Figs. 13 and 20 to 23, the left and right passage forming mechanisms 138 are attached to the upper face of the mower deck 134 with a gap in the left-right direction corresponding to the distance between the centers of the left and right front wheels 110 (wheel distance). The passage forming mechanisms 138 include intermediate passage forming members 147, which are fixed to the upper face of the mower deck 134, front passage forming members 148 and rear passage forming members 149, which are supported by the intermediate passage forming members 147 so as to be able to slide in the front-rear direction, a guide rod 150 for guiding the left front wheel 110 to the corresponding front-wheel rideover passage, and so on.

Each intermediate passage forming member 147 has a length in the front-rear direction that spans both ends, in the front-rear direction, of the mower deck 134, and forms an intermediate passage portion that passes above the power distribution mechanism 135 on the rideover passage. Each front passage forming member 148 slides between a storage position that is located within the length, in the front-rear direction, of the intermediate passage forming member 147 and an operation position at which the front passage forming member 148 tilts downward to the front side from a front end of the intermediate passage forming member 147 toward the ground in front. Each front passage forming member 148 forms a front passage portion extending forward of an intermediate passage portion in the rideover passage, by being located at the operation position. Each rear passage forming member 149 slides between a storage position that is located within the length, in the front-rear direction, of the intermediate passage forming member 147 and an operation position at which the rear passage forming member 149 tilts downward to the rear side from a trailing end of the intermediate passage forming member 147 toward the ground behind. The rear passage forming member 149 forms a rear passage portion extending rearward of the intermediate passage portion in the rideover passage, by being located at the operation position. The front passage forming members 148 and the rear passage forming members 149 are held at their storage positions by respective holding mechanisms (not shown), and can slide to the respective operation positions as a result of the state of being held by the holding mechanisms being canceled. The guide rod 150 on the left side is arranged in a posture extending along the rideover passage in a laterally outer region relative to the corresponding rideover passage of the mower deck 134, and guides a laterally outer face of the left front wheel 110.

That is to say, the left and right passage forming mechanisms 138 are configured to form the front-wheel rideover passages for the mower unit 102 when the front passage forming members 148 and the rear passage forming members 149 are slid and displaced from the respective storage positions to the respective operation positions.

### Attachment/detachment mechanism

As shown in Figs. 15 to 25, the attachment/detachment mechanism 104 includes left and right first engaged elements 151, which are arranged in an upper face on the front side of the mower deck 134, a second engaged element 152, which is arranged in an upper face on the rear side of the mower deck 134, left and right first engaging elements 153, which are arranged on the front side of the support frame 133 in the first link mechanism 103, left and right second engaging elements 154, which are arranged in both left and right end regions on a rear end portion of the support frame 133, a lock unit 155, which is arranged in the rear end portion of the support frame 133, and so on.

Each of the left and right first engaged elements 151 is made of a steel plate and has a first guiding face 151A, whose front end side is located further on the central side, in the left-right direction, of the mower deck 134, and the first guiding face 151A is oriented to the front side. Each of the left and right first engaged elements 151 extends upward from the upper face of the mower deck 134. Each of the left and right first engaged elements 151 has a first recessed portion 151B, which is recessed toward the front side from its rear end to form a shape that is narrowed on the front side. The second engaged element 152 includes left and right guide plates 156, each of which is bent to form a V-shape having a second guiding face 156A, whose front end side is further located on the central side, in the left-right direction, of the mower deck 134, and the second guide plate 156A is oriented toward the internal front, and an engaged rod 157, which spans the left and right guide plates 156. Each of the left and right first engaging elements 153 includes a first guided face 153A, which is to be guided by the corresponding first guiding face 151A and is oriented to the internal front, and an engaging pin 153B, which is to be inserted into the first recessed portion 151B of the corresponding first engaged element 151. Each of the second engaging elements 154 is made of a steel plate, which is curved to form a V-shape and has a second guided face 154A that is to be guided by the second guiding face 156A and is oriented to the internal front. A second recessed portion 154B, which is to engage with the corresponding engaged rod 157 of the second engaged element 152, is formed in each of the left and right second engaging elements 154 so as to be recessed from the front end thereof toward the rear side and formed into a shape that is narrowed toward the rear side.

With the above configuration of the attachment/detachment mechanism 104, upon the left and right front wheels 110 performing forward rideover travel to pass through the front-wheel rideover passages, with the first link mechanism 103 located at its lower limit position, the guided faces 153A and 154A on the first link mechanism side are guided by the guiding faces 151A and 156A on the mower unit side, the engaging pins 153B on the first link mechanism side engage with the corresponding first recessed portions 151B on the mower unit side, and the second recessed portions 154B on the first link mechanism side engage with the engaged rod 157 on the mower unit side. Thus, the first link mechanism 103 can be connected to the mower unit 102, and the mower unit 102 can be positioned at the lower body portion of the tractor 101.

That is to say, the attachment/detachment mechanism 104 is configured to be of a rideover-connection type in which the first link mechanism 103 is connected to the mower unit 102 through forward rideover travel of the left and right front wheels 110, i.e. by causing the front wheels 110 to ride over the mower unit 102 from behind the mower unit 102.

### Lock unit

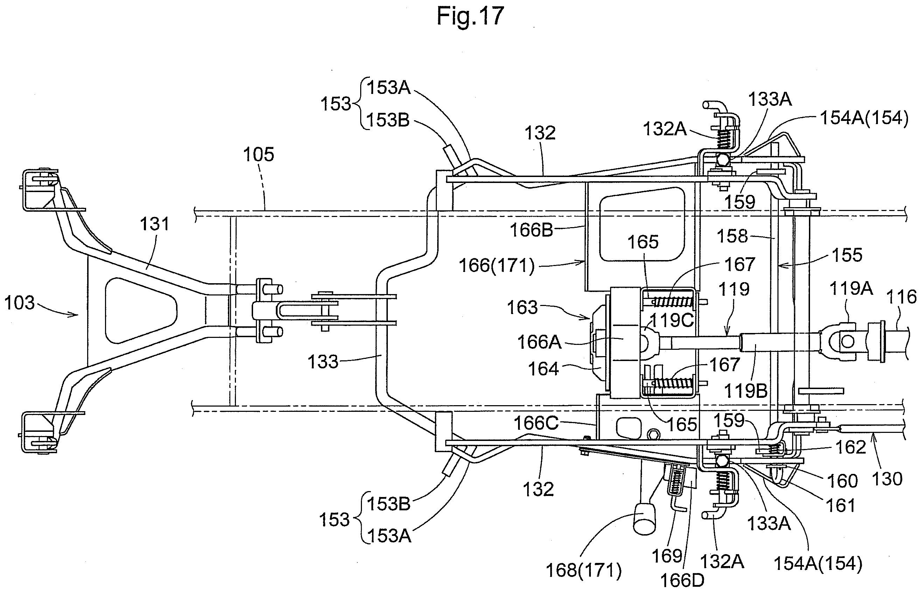

As shown in Figs. 17 to 19, 22 and 23, the lock unit 155 includes a rotary shaft 158, which spans left and right end regions of the rear end portion of the support frame 133, left and right hook members 159, which are fixed to left and right end sides of the rotary shaft 158, an operating arm 160, which is fixed to a left end portion of the rotary shaft 158, a locking pin 161, which is inserted to either one of a front and rear locking holes 133B and 133C formed at a left rear end portion of the support frame 133, a compression spring 162 for biasing the locking pin 161 in the inserting direction, and so on.

In the lock unit 155, a pivoting operation is allowed to be made to the operating arm 160 in the front-rear direction as a result of the locking pin 161 being pulled out of the front or rear locking hole 133B or 133C, and the left and right hook members 159 pivot between respective locking positions and unlocking position as a result of the operating arm 160 being subjected to the pivoting operation in the front-rear direction. When the left and right hook members 159 reach the respective locking positions due to a pivoting operation made to the operating arm 160, the locking pin 161 is inserted into the front locking hole 133B due to the action of the compression spring 162 upon the hook members 159 reaching the locking positions, and this insertion causes the left and right hook members 159 to be fixed at the locking position. When the left and right hook members 159 reach the unlocking position due to a pivoting operation made to the operating arm 160, the locking pin 161 is inserted into the rear locking hole 133C due to the action of the compression spring 162 upon the hook members 159 reaching the respective unlocking positions, and this insertion causes the left and right hook members 159 to be fixed at the unlocking position.

The left and right hook members 159 engage, from behind, with the engaged rod 157 on the mower unit side as a result of the first link mechanism 103 pivoting from the unlocking position to the locking position in a state of being connected to the mower unit 102, and inhibit the mower unit 102 from moving rearward of the first link mechanism 103. Also, the left and right hook members 159 are disengaged from the engaged rod 157 on the mower unit as a result of the first link mechanism 103 pivoting from the locking position to the unlocking position in a state of being connected to the mower unit 102, and allow the mower unit 102 to move rearward of the first link mechanism 103.

That is to say, as a result of a pivoting operation being made to the operating arm 160, and the hook members 159 being pivoted and displaced from the unlocking position to the locking position with the first link mechanism 103 connected to the mower unit 102, the lock unit 155 switches to a locking state of inhibiting the first link mechanism 103 and the mower unit 102 from being disconnected. Also, as a result of a pivoting operation being made to the operating arm 160, and the hook members 159 being pivoted and displaced from the locking position to the unlocking position with the first link mechanism 103 connected to the mower unit 102, the lock unit 155 switches to an unlocking state of allowing the first link mechanism 103 and the mower unit 102 to be disconnected.

### Support unit

As shown in Figs. 17 to 19, 22 and 23, the support frame 133 of the first link mechanism 103 includes a support unit 163 for supporting the second universal joint 119C of the external transmission mechanism 119 so as to be able to slide in the front-rear direction. The support unit 163 includes a holder 164 for rotatably supporting the second universal joint 119C, left and right rods 165, which extend rearward from the holder 164, a support plate 166 for supporting the left and right rods 165 so as to be able to slide in the front-rear direction, left and right compression springs 167 for biasing the holder 164 so as to protrude forward, via the left and right rods 165, an operating lever 168, which pivots in the front-rear direction and is slid in the front-rear direction relative to the holder 164 via the left rod 165, a holding mechanism 169 for holding the operating lever 168 at two positions, namely front and rear positions.

In the support unit 163, upon the operating lever 168 being operated from a first operation position on the front side to a second operation position on the rear side with the first link mechanism 103 connected to the mower unit 102, the holder 164 slides in conjunction with this operation from a disconnecting position on the rear side to a transmitting position on the front side, and this sliding movement causes the second universal joint 119C to switch from a non-transmittable state where the spline-fitting to the input shaft 139 of the power distribution mechanism 135 has been canceled to a transmittable state of being fitted, using splines, to the input shaft 139. The support unit 163 then maintains the transmittable state as a result of the operating lever 168 being held at the second operation position by the holding mechanism 169.

Also, in the support unit 163, upon the operating lever 168 being operated from the second operation position on the rear side to the first operation position on the front side with the first link mechanism 103 connected to the mower unit 102, the holder 164 slides in conjunction with this operation from the transmitting position on the front side to the disconnecting position on the rear side, and this sliding movement causes the second universal joint 119C to switch from the transmittable state to the non-transmittable state. The support unit 163 then maintains the non-transmittable state as a result of the operating lever 168 being held at the first operation position by the holding mechanism 169.

With the above configuration, the operator connects the first link mechanism 103 to the mower unit 102 through forward rideover travel, then switches the lock unit 155 in the attachment/detachment mechanism 104 from the unlocking state to the locking state, operates the operating lever 168 from the first operation position to the second operation position, and thereafter holds the operating lever 168 at the second operation position using the holding mechanism 169. Thus, the mower unit 102 can be attached to the lower body portion of the tractor 101 so as to be able to be lifted and lowered, in a state of being able to be driven by operational power from the tractor 101.

Also, with the mower unit 102 attached to the lower body portion of the tractor 101, the operator cancels the state where the operating lever 168 is held at the second operation position by the holding mechanism 169, operates the operating lever 168 from the second operation position to the first operation position, and switches the lock unit 155 in the attachment/detachment mechanism 104 from the locking state to the unlocking state. Thus, the mower unit 102 can be allowed to move rearward of the first link mechanism 103. In this allowed state, the operator can detach the engaging pins 153B and the second recessed portions 154B on the first link mechanism side, respectively from the first recessed portions 151B and the engaged rod 157 on the mower unit side as a result of the left and right front wheels 110 performing reverse rideover travel to pass through the front-wheel rideover passages. Thus, the connection between the first link mechanism 103 and the mower unit 102 using the attachment/detachment mechanism 104 can be canceled, and the mower unit 102 can be removed from the lower body portion of the tractor 101.

### Check bore

As shown in Figs. 14, 24 and 25, a check bore 170, which allows the operator sitting in the operation unit 109 to visually confirm the attachment and detachment between the first link mechanism 103 and the mower unit 102 using the attachment/detachment mechanism 104, is formed in the floor panel 120 in the operation unit 109.

Thus, when connecting the first link mechanism 103 to the mower unit 102, the operator can visually confirm the connection of the mower unit 102 to the first link mechanism 103 through the check bore 170, while performing a forward rideover travel operation in the operation unit 109.

Also, when disconnecting the first link mechanism 103 and the mower unit 102, the operator can visually confirm the disconnection between the first link mechanism 103 and the mower unit 102 through the check bore 170, while performing a reverse rideover travel operation in the operation unit 109.

As a result, the operator can readily check, from the operation unit 109, attachment of the mower unit 102 to the tractor 101 and detachment of the mower unit 102 from the tractor 101, and does not need to leave the tractor 101 for the checking.

A first through-hole 120A, into which an arm portion 122A of the forward speed change pedal 122 is inserted, a second through-hole 120B, into which an arm portion 123A of the reverse speed change pedal 123 is inserted, a third through-hole 120C, into which an arm portion 124A of the brake pedal 124 is inserted, a fourth through-hole 120D, into which an arm portion 125A of the parking pedal 125 is inserted, and so on are formed in the floor panel 120 of the operation unit 109. Of these through-holes 120A to 120D, the third through-hole 120C has a wide opening area so as to function as the check bore 170.

That is to say, since the third through-hole 120C for the brake pedal is also used as the check bore 170, the number of through-holes 120A to 120D formed in the floor panel 120 can be reduced.

As a result, attachment and detachment of the mower unit 102 to and from the tractor 101 can be readily checked from the operation unit 109, while making the manufacturing, strength, and the like of the floor panel 120 advantageous.

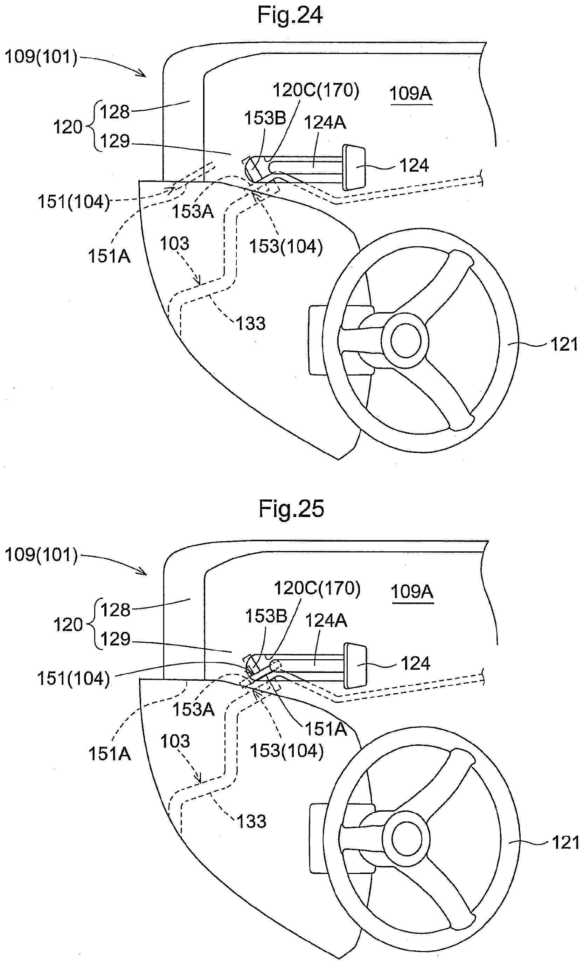

As shown in Figs. 24 and 25, in the attachment/detachment mechanism 104, of the engaging elements 153 and 154 provided in the support frame 133 in the first link mechanism 103, the right first engaging element 153 is arranged at a position that can be visually confirmed from the operation unit 109 through the check bore 170.

With this configuration, when the first link mechanism 103 is connected to the mower unit 102 through forward rideover travel, the operator can visually confirm, through the check bore 170, the position of the right first engaging element 153 relative to the right first engaged element 151 of the mower unit 102, while performing the forward rideover travel operation in the operation unit 109. With this configuration, the operator can readily position the right first engaging element 153 relative to the right first engaged element 151 of the mower unit 102 during forward rideover travel, and can readily engage the engaging elements 153 and 154 in the first link mechanism 103 with the engaged elements 151 and 152 in the mower unit 102.

As a result, the operator can readily attach the mower unit 102 to the tractor 101 through forward rideover travel.

The operator then visually confirms that the right first engaging element 153 has been engaged with the right first engaged element 151 of the mower unit 102, from the operation unit 109 through the check bore 170, thereby being able to check that the connection between the first link mechanism 103 and the mower unit 102 using the attachment/detachment mechanism 104 is complete, while staying at the operation unit 109.

Also, when canceling the connection between the first link mechanism 103 and the mower unit 102 using the attachment/detachment mechanism 104 through reverse rideover travel, the operator can visually confirm, through the check bore 170, the position of the right first engaging element 153 relative to the right first engaged element 151 of the mower unit 102, while performing a reverse rideover travel operation in the operation unit 109. The operator thus visually confirms that the right first engaging element 153 has been disengaged from the right first engaged element 151 of the mower unit 102, from the operation unit 109 through the check bore 170, thereby being able to check that the connection between the first link mechanism 103 and the mower unit 102 using the attachment/detachment mechanism 104 has been canceled, while staying at the operation unit 109.

### Cover unit

As shown in Figs. 13, 14 and 17 to 23, this passenger mowing machine includes a cover unit 171 for covering and protecting the second transmission unit 141 and so on, in the power distribution mechanism 135. The cover unit 171 is configured to cover the second transmission unit 141 and so on, with a first cover body 172 located on the right side and a second cover body 173 located on the left side, which are connected to the upper face of the mower deck 134 in an attachable and detachable manner, as well as with the support plate 166 and the operating lever 168 in the aforementioned support unit 163, and so on.

Cutout portions 172A and 173A are formed in the first cover body 172 and the second cover body 173, respectively, in order to expose the transmission case 142 in the first transmission unit 140 and avoid the second universal joint 119C, the support unit 163, and so on, on the tractor side from coming into contact with the first cover body 172 and the second cover body 173 during the aforementioned forward rideover travel, for example.

The support plate 166 includes a first plate 166A for covering the second universal joint 119C and so on, from above, a second plate 166B located on the right side, which spans a right end portion of the first plate 166A and a right end portion of the support frame 133, a third plate 166C located on the left side, which spans a left end portion of the first plate 166A and a left end portion of the support frame 133, a fourth plate 166D, which extends behind the operating lever 168, to the left rear side from the left end portion of the support frame 133, and so on. The support plate 166 is configured so that, in a state where the first link mechanism 103 has been connected to the mower unit 102 through the forward rideover travel, the first plate 166A, the third plate 166C, and the fourth plate 166D are located above the cutout portions 172A and 173A of the first cover body 172 and the second cover body 173, and cover, from above, the tension pulley 145, a portion of the endless rotary belt 146, and so on, which are located below the cutout portions 172A and 173A.

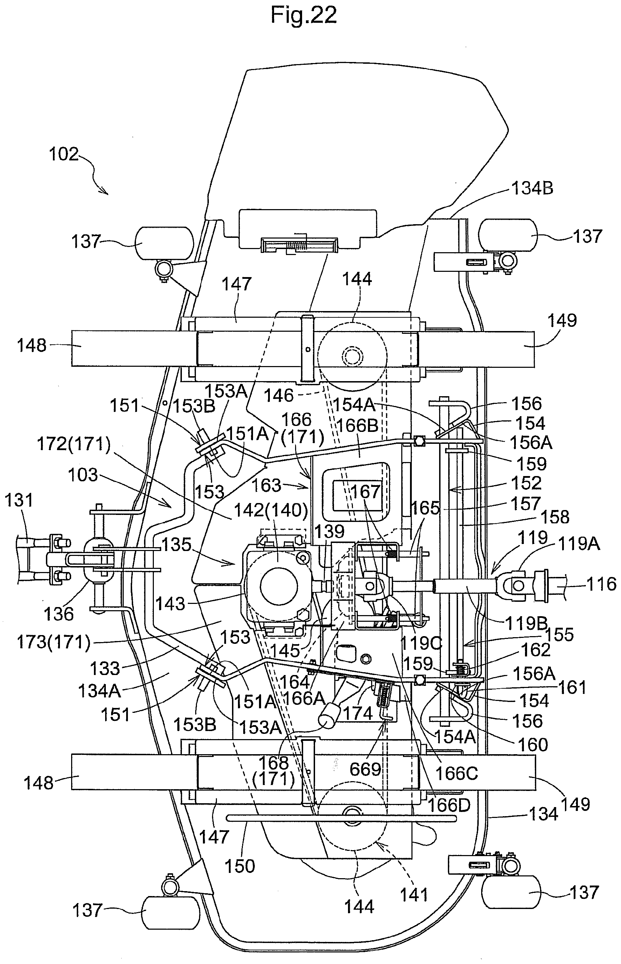

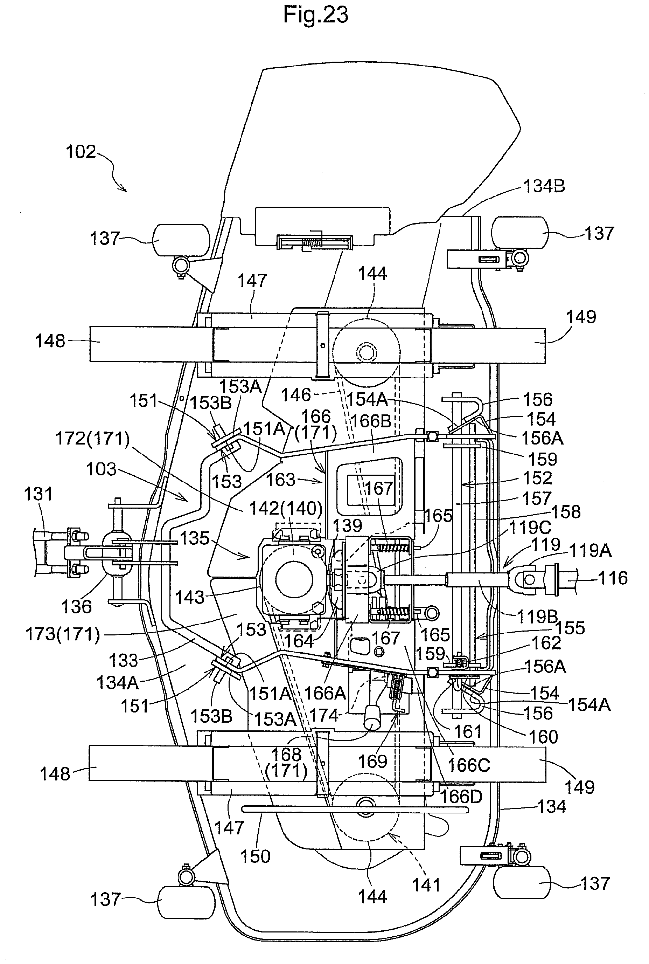

The operating lever 168 is configured so that, when operated to the second operation position at which the second universal joint 119C is fitted, using splines, to the input shaft 139 of the power distribution mechanism 135 with the first link mechanism 103 connected to the mower unit 102, the operating lever 168 is located above a space 174 (see Figs. 22 and 23) that is formed between the second cover body 173 and the second plate 166B of the support plate 166, and covers, from above, the tension pulley 145, a portion of the endless rotary belt 146, and so on, which are located below this space 174.

With the above configuration, during, for example, forward rideover travel for connecting the first link mechanism 103 to the mower unit 102, the second universal joint 119C, the support unit 163, and so on, on the tractor side can be prevented from coming into contact with the first cover body 172 and the second cover body 173 of the cover unit 171. Meanwhile, in an operable state where the mower unit 102 has been attached to the lower body portion of the tractor 101 in a state of being able to be driven so as to be able to be lifted and lowered, the second transmission unit 141 in the power distribution mechanism 135, together with the second universal joint 119C and so on, can be covered and protected from above by the cover unit 171.

### Variations of Second Embodiment

Only differences from the above embodiment will be described below.
[1] Representative variations of the configuration of the passenger work vehicle are as follows.
   For example, the passenger work vehicle may also be of an electric type that includes an electric motor in place of the engine 112.
   For example, the passenger work vehicle may also be of a hybrid type that includes the engine 112 and an electric motor.
   For example, the passenger work vehicle may also include a dedicated hydraulic cylinder for driving the link mechanism 103 so as to lift and lower it, or the like.
[2] The mid-mount work implement (mower unit 102) may also be a grass collecting apparatus that is configured so that the left and right front wheels 110 can ride over the work implement.
[3] Representative variations of the attachment/detachment mechanism 104 are as follows.
   For example, in the attachment/detachment mechanism 104, the left first engaging element 153, of the engaging elements 153 and 154 provided in the link mechanism 103, may also be arranged at a position that can be visually confirmed from the operation unit 109 through the check bore 170.
   For example, in the attachment/detachment mechanism 104, the left and right first engaging elements 153, of the engaging elements 153 and 154 provided in the link mechanism 103, may also be arranged at positions that can be visually confirmed from the operation unit 109 through the check bore 170.
   For example, in the attachment/detachment mechanism 104, all of the engaging elements 153 and 154 provided in the link mechanism 103 may also be arranged at positions that can be visually confirmed from the operation unit 109 through the check bore 170.
[4] Representative variations of the check bore 170 are as follows.
   For example, the first through-hole 120A into which the arm portion 122A of the forward speed change pedal 122 is inserted may also be formed to have a large opening area so as to function as the check bore 170.
   For example, the second through-hole 120B into which the arm portion 123A of the reverse speed change pedal 123 is inserted may also be formed to have a large opening area so as to function as the check bore 170.
   For example, the fourth through-hole 120D into which the arm portion 125A of the parking pedal 125 is inserted may also be formed to have a large opening area so as to function as the check bore 170.
   For example, each of the third through-hole 120C into which the arm portion 124A of the brake pedal 124 is inserted and the fourth through-hole 120D into which the arm portion 125A of the parking pedal 125 is inserted may also be formed to have a large opening area so as to function as the check bore 170.
   For example, the check bore 170 may also be formed only for the checking in the floor panel 120, separately from the through-holes 120A to 120D into which the arm portions 122A to 125A of the pedals 122 to 125A are inserted.
[5] The above embodiment is applicable to, for example, a passenger work vehicle, such as a passenger mowing machine or a passenger grass collecting vehicle, that is configured to be of a mid-mount type in which a work implement such as a mower unit or a grass collecting apparatus is provided between the left and right front wheels and the left and right rear wheels.

### THIRD EMBODIMENT

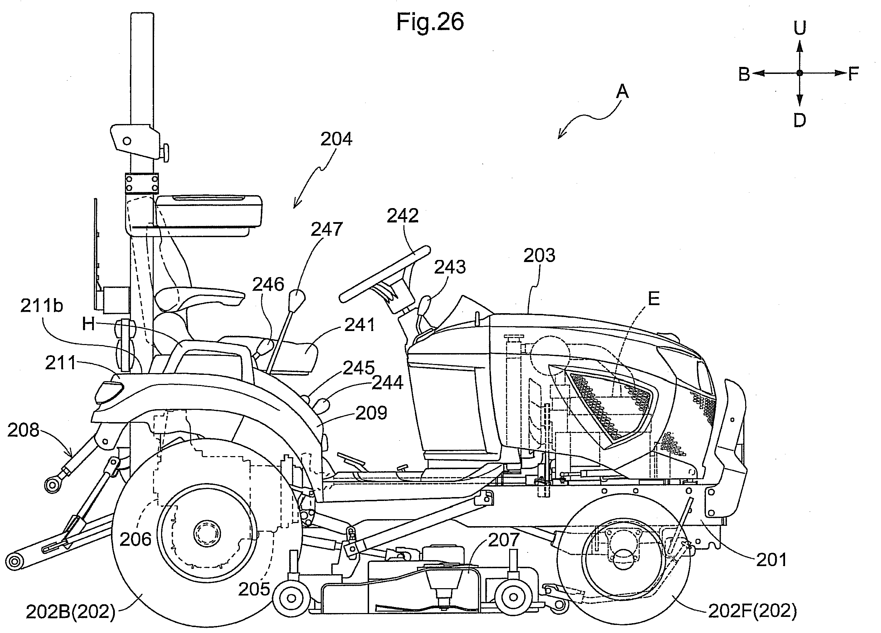

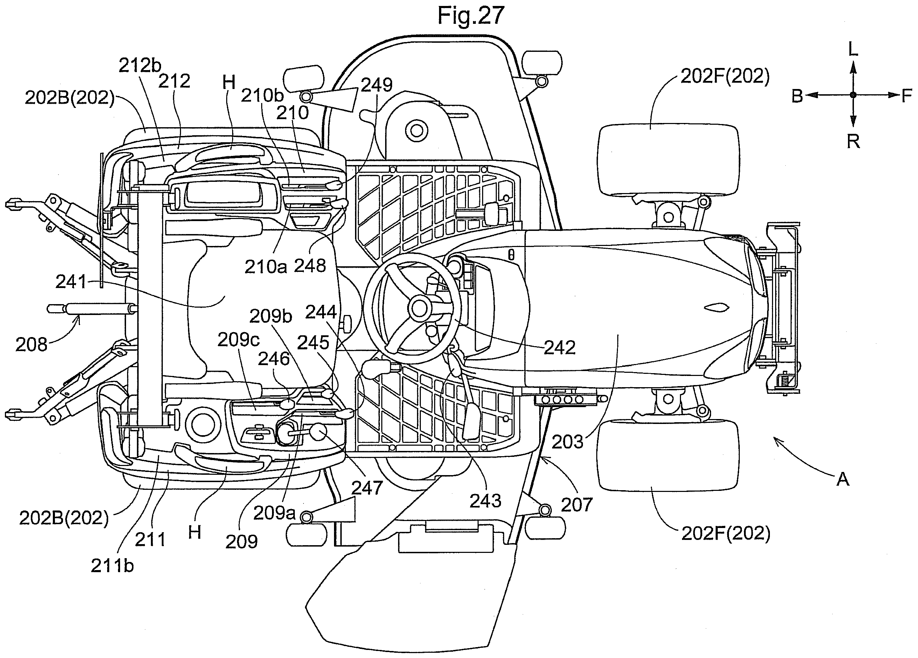

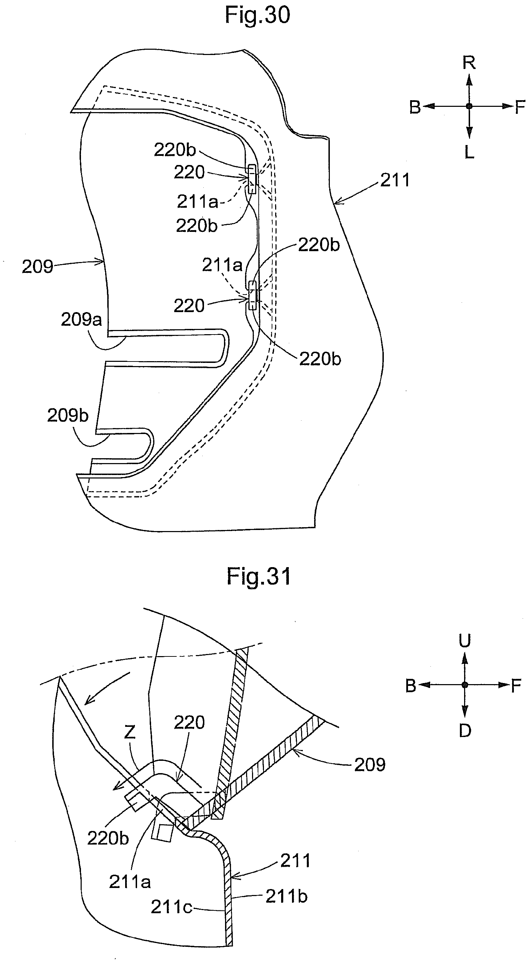

A mode for carrying out the present invention will be described based on the drawings. Note that, in the following description, "front" refers to the direction of the arrow F shown in Figs. 26 to 28, 30, 31 and 34, "rear" refers to the direction of the arrow B, "left" refers to the direction of the arrow L shown in Figs. 27, 28, 30 and 34, and "right" refers to the direction of the arrow R. "Upper/above" refers to the direction of the arrow U shown in Figs. 26 and 31, and "lower/below" refers to the direction of the arrow D.

### Overall configuration of tractor

As shown in Figs. 26 and 27, a tractor A (which corresponds to "work vehicle" according to the present invention) includes a body frame 201, and a wheel-type traveling apparatus 202 for supporting the body frame 201. The traveling apparatus 202 includes a pair of left and right front wheels 202F, which can be steered and driven, and a pair of left and right rear wheels 202B, which can be driven.

A hood 203 is provided in a front half portion of the vehicle body. An engine E is accommodated in a space surrounded by the hood 203. An operation unit 204 is provided in a rear half portion of the vehicle body. The operation unit 204 includes an operator seat 241, a steering wheel 242, an accelerator lever 243, a sub-gear shift lever 244, a switching lever 245, a lifting lever 246, a front loader operating lever 247, a PTO clutch lever 248, and a PTO selection lever 249.

The operator can perform operations to steer the vehicle body by operating the steering wheel 242. The operator can also change the number of revolutions of the engine E by operating the accelerator lever 243.

A hydrostatic continuously variable transmission apparatus 205, which serves as a main transmission apparatus, and a transmission case 206 are provided below the operator seat 241. A gear-type transmission apparatus (not shown), which serves as a sub-transmission apparatus, and so on, are accommodated in the transmission case 206.

The tractor A is configured so that a front loader (not shown) can be attached thereto. A mower 207 is provided so as to be able to be lifted and lowered below the body frame 201 between the front wheels 202F and the rear wheels 202B. A link mechanism 208, to which a work implement (not shown) such as a rotary cultivation machine can be attached, is provided in a rear end portion of the vehicle body.

To drive the mower 207, the driving force of the engine E can be taken from a mid-PTO shaft (not shown). Also, to drive the work implement such as a rotary cultivation machine, the driving force of the engine E can be taken from a rear PTO shaft (not shown). A PTO clutch (not shown) is provided, which can switch between a transmission state of transmitting the driving force of the engine E to the rear PTO shaft and the mid-PTO shaft and a cut-off state of cutting off the transmission of the driving force of the engine E to the rear PTO shaft and the mid-PTO shaft.

As shown in Figs. 26 and 27, a right fender 211 (which corresponds to "fender" according to the present invention) is provided above the right rear wheel 202B, of the pair of left and right rear wheels 202B. The right fender 211 is provided in a state of covering the right rear wheel 202B.

A right cover 209 (which corresponds to "cover" according to the present invention), which is made of a resin, is supported on an outer face 211b of the right fender 211. As shown in Fig. 27, a first guide groove 209a, a second guide groove 209b, and a third guide groove 209c are formed in the right cover 209.

The sub-gear shift lever 244 is provided in a state of passing through the first guide groove 209a. The switching lever 245 is provided in a state of passing through the second guide groove 209b. The lifting lever 246 is provided in a state of passing through the third guide groove 209c.

The operator can perform a speed change operation to the aforementioned sub-transmission apparatus by operating the sub-gear shift lever 244. The operator can also perform an operation to switch the traveling apparatus 202 between a four-wheel drive state and a two-wheel drive state by operating the switching lever 245.

The operator can also perform an operation to lift and lower the aforementioned work implement by operating the lifting lever 246. The operator can also operate the aforementioned front loader by operating the front loader operating lever 247.

A left fender 212 is provided above the left rear wheel 202B, of the pair of left and right rear wheels 202B. The left fender 212 is provided in a state of covering the left rear wheel 202B.

A left cover 210, which is made of a resin, is supported on an outer face 212b of the left fender 212. As shown in Fig. 27, a fourth guide groove 210a and a fifth guide groove 210b are formed in the left cover 210. Note that a front portion and a rear portion of the left cover 210 are fastened to the left fender 212 with bolts (not shown).

The PTO clutch lever 248 is provided in a state of passing through the fourth guide groove 210a. The PTO selection lever 249 is provided in a state of passing through the fifth guide groove 210b.

The operator can perform an operation to engage and disengage the aforementioned PTO clutch by operating the PTO clutch lever 248. The operator can also perform an operation to select a PTO shaft to be driven, by operating the PTO selection lever 249.

As shown in Fig. 27, handrails H are provided on the right fender 211 and the left fender 212. The operator can use the handrails H as handles when boarding and leaving the tractor A.

Thus, the tractor A includes the right fender 211. The tractor A also includes the right cover 209 that is supported on the outer face 211b of the right fender 211.

### Assembly structure of the right cover

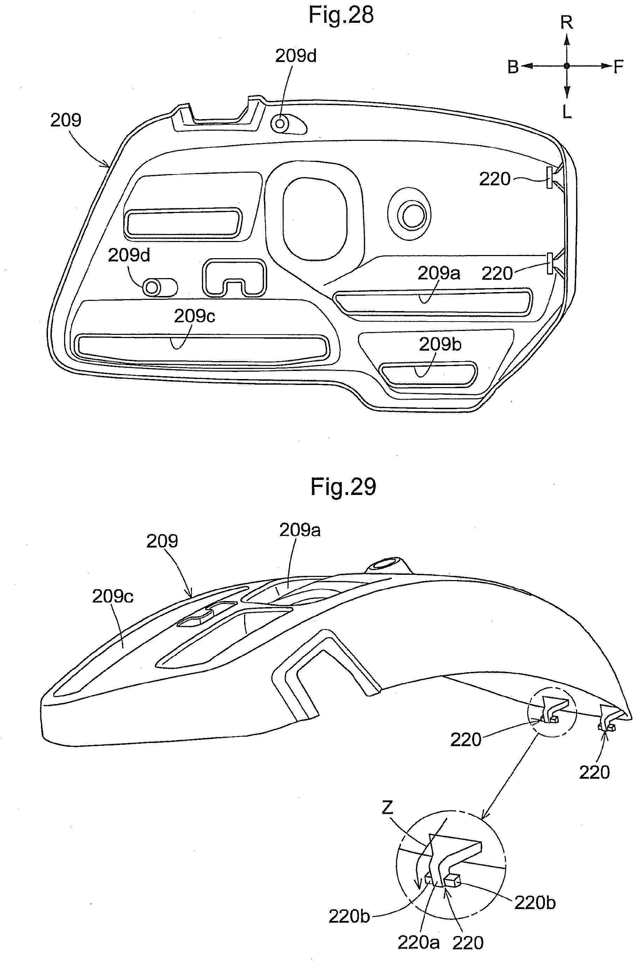

As shown in Figs. 28 and 29, the tractor A includes a plurality of engaging portions 220. In this embodiment, two engaging portions 220 are provided. The engaging portions 220 are provided in a state of protruding from the right cover 209. More specifically, the engaging portions 220 are provided in a state of protruding from a peripheral portion of the right cover 209.

Thus, the tractor A includes the engaging portions 220 that are provided in a state of protruding from the right cover 209. In the tractor A, the plurality of engaging portions 220 are provided in a state of protruding from the right cover 209.

In this embodiment, the engaging portions 220 are provided in a state of protruding from a peripheral portion of a front portion of the right cover 209. More specifically, the engaging portions 220 are provided in a state of protruding from a front end portion of the right cover 209.

As shown in Fig. 30, a plurality of groove portions 211a are formed in the right fender 211. In this embodiment, two groove portions 211a are formed. As shown in Figs. 30 and 31, the plurality of engaging portions 220 engage with the plurality of groove portions 211a in one-to-one correspondence.

Thus, the tractor A includes the groove portions 211a formed in the right fender 211. In the tractor A, the engaging portions 220 engage with the groove portions 211a.

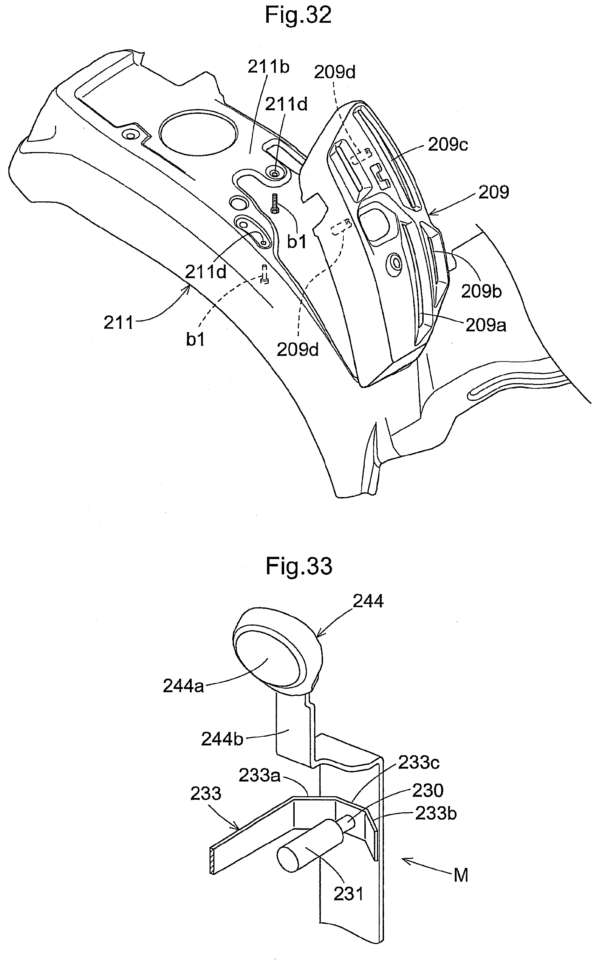

As shown in Figs. 30 to 32, the front portion of the right cover 209 is supported on the outer face 211b of the right fender 211 via the engaging portions 220 and the groove portions 211a. Also, as shown in Fig. 32, a rear portion of the right cover 209 is fastened to the right fender 211 with bolts b1.

The fastening with the bolts b1 will now be described in detail. As shown in Figs. 28 and 32, two boss portions 209d are provided in an inner face of the right cover 209. Also, as shown in Fig. 32, two boss portion 211d are formed in the right fender 211. The positions at which the two boss portions 211b are provided correspond to the positions at which the two boss portions 209d are provided.

As shown in Fig. 32, the bolts b1 are inserted into the boss portions 211d from below and are fastened to the boss portions 209d.

Also, as shown in Figs. 29 and 30, the engaging portions 220 each have a central portion 220a and two protruding portions 220b.

The central portion 220a extends from the front end portion of the right cover 209 and passes through the corresponding groove portion 211a. The two protruding portions 220b protrude in a direction perpendicular to the direction Z in which the central portion 220a extends, from an extension end portion of the central portion 220a. In this embodiment, a protruding portion 220b located on the right side, of the two protruding portions 220b, protrudes rightward. A protruding portion 220b located on the left side, of the two protruding portions 220b, protrudes leftward.

Thus, the engaging portions 220 each include the central portion 220a that extends from the right cover 209 and passes through the corresponding groove portion 211a, and the protruding portions 220b that protrude in a direction perpendicular to the direction Z in which the central portion 220a extends, from the extension end portion of the central portion 220a.

The right cover 209 depicted with solid lines in Fig. 31 and the right cover 209 shown in Fig. 32 are in a state where the central portion 220a passes through the corresponding groove portion 211a, and where the rear portion of the right cover 209 is raised. In this state, the shape of each protruding portion 220b is formed so as to fit the shape of the inner face 211c of the right fender 211, as shown in Fig. 31.

Thus, the shape of each protruding portion 220b fits the shape of the inner face 211c of the right fender 211 in a state where the central portion 220a passes through the corresponding groove portion 211a and where the right cover 209 is raised.

With this configuration, when the operator engages the engaging portions 220 with the groove portions 211a with the rear portion of the right cover 209 raised, a situation where the protruding portions 220b interfere with the right fender 211 can be avoided.

That is to say, when the operator assembles the right cover 209 with the right fender 211, the engaging portions 220 can be engaged with the groove portions 211a with the rear portion of the right cover 209 raised, as shown in Figs. 31 and 32. Then, the right cover 209 can be assembled with the right fender 211 by lowering the rear portion of the right cover 209 as depicted with imaginary lines in Fig. 31, and fastening the rear portion of the right cover 209 to the right fender 211 with the bolts b1 as shown in Fig. 32.

With the above-described configuration, a configuration can be realized in which the right cover 209 is supported on the outer face 211b of the right fender 211 via the engaging portions 220 and the groove portions 211a. Accordingly, since the right cover 209 does not need to be fastened to the right fender 211 with bolts in a region near the engaging portions 220, a situation where the space surrounded by the right cover 209 and the space below the right fender 211 are narrowed by bolts can be avoided. In addition, in the region near the engaging portions 220, a space for inserting a tool for bolt-fastening does not need to be secured within the space below the right fender 211.

Accordingly, with the above-described configuration, in the region near the engaging portions 220, a space for arranging members can be readily secured in the space surrounded by the right cover 209 that is supported on the outer face 211b of the right fender 211 and the space below the right fender 211.

### Regarding neutral detection mechanism

As shown in Fig. 33, the sub-gear shift lever 244 includes a handle portion 244a and an arm portion 244b. The handle portion 244a is fixed to an upper end of the arm portion 244b. The operator can pivot the sub-gear shift lever 244 in the front-rear direction while holding the handle portion 244a.

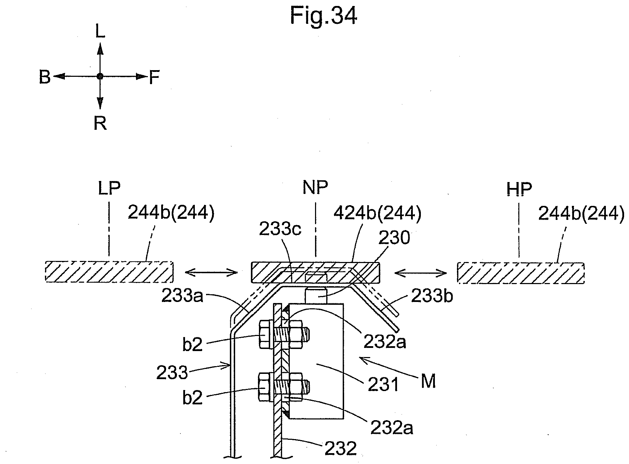

As shown in Fig. 34, the sub-gear shift lever 244 is configured so that its position can be switched among a low-speed position LP, a neutral position NP, and a high-speed position HP, by being pivoted in the front-rear direction. The neutral position NP is located between the low-speed position LP and the high-speed position HP.

When the sub-gear shift lever 244 is located at the low-speed position LP, the aforementioned sub-transmission apparatus is in a low-speed state. When the sub-gear shift lever 244 is located at the high-speed position HP, the aforementioned sub-transmission apparatus is in a high-speed state. When the sub-gear shift lever 244 is located at the neutral position NP, the aforementioned sub-transmission apparatus is in a neutral state where power is not transmitted.

As shown in Figs. 33 and 34, the tractor A includes a neutral detection mechanism M. The neutral detection mechanism M is arranged in the space surrounded by the right cover 209. The neutral detection mechanism M includes a detection switch 230, a switch base portion 231, a switch support portion 232, and a flat spring 233.

The detection switch 230 is configured to send, upon being pressed, a predetermined signal to a control apparatus (not shown), which is mounted in the tractor A. This control apparatus is configured to determine that the sub-transmission apparatus is in the aforementioned neutral state if it has received the predetermined signal from the detection switch 230. Also, this control apparatus is configured to determine that the sub-transmission apparatus is not in the aforementioned neutral state if it has not received the predetermined signal from the detection switch 230.

The flat spring 233 includes a first inclined portion 233a, a second inclined portion 233b, and a pressing portion 233c. The pressing portion 233c is located between the first inclined portion 233a and the second inclined portion 233b in the front-rear direction. All of the first inclined portion 233a, the second inclined portion 233b, and the pressing portion 233c are formed into a plate shape.

As shown in Fig. 34, the first inclined portion 233a extends so that its front side is located further leftward relative to the vehicle body, when seen in a plan view. The second inclined portion 233b extends so that its front side is located further rightward relative to the vehicle body, when seen in a plan view. The pressing portion 233c extends in the front-rear direction when seen in a plan view.

With this configuration, the first inclined portion 233a and the second inclined portion 233b incline relative to the direction in which the sub-gear shift lever 244 pivots. The pressing portion 233c extends parallel to the direction in which the sub-gear shift lever 244 pivots.

The detection switch 230 is arranged on the right side of the pressing portion 233c. The detection switch 230 is supported by the switch support portion 232 via the switch base portion 231. Elongated holes 232a are formed in the switch support portion 232. The switch base portion 231 is fastened to the switch support portion 232 with switch bolts b2, which pass through the elongated holes 232a.

As shown in Fig. 34, when the operator pivots the sub-gear shift lever 244 from the low-speed position LP to the neutral position NP, the arm portion 244b abuts against the first inclined portion 233a in the course of the pivoting. As a result of the operator then pressing the sub-gear shift lever 244 toward the neutral position NP with the arm portion 244b abutting against the first inclined portion 233a, pressing force is applied from the arm portion 244b to the first inclined portion 233a.

The flat spring 233 elastically deforms due to this pressing force. This causes the pressing portion 233c to be displaced to the right side. As a result, the detection switch 230 is pressed by the pressing portion 233c.

That is to say, upon the operator pivoting the sub-gear shift lever 244 from the low-speed position LP to the neutral position NP, the detection switch 230 is pressed. Thus, the aforementioned control apparatus determines that the sub-transmission apparatus is in the aforementioned neutral state.

Then, upon the operator pivoting the sub-gear shift lever 244 from the neutral position NP to the high-speed position HP, the arm portion 244b separates from the pressing portion 233c, as shown in Fig. 34. This restores the flat spring 233 to the original shape. As a result, the detection switch 230 enters a state of not being pressed.

That is to say, upon the operator pivoting the sub-gear shift lever 244 from the neutral position NP to the high-speed position HP, the detection switch 230 enters a state of being not pressed. Thus, the aforementioned control apparatus determines that the sub-transmission apparatus is not in the aforementioned neutral state.

As shown in Fig. 34, when the operator pivots the sub-gear shift lever 244 from the high-speed position HP to the neutral position NP, the arm portion 244b abuts against the second inclined portion 233b in the course of the pivoting. As a result of the operator then pulling the sub-gear shift lever 244 toward the neutral position NP with the arm portion 244b abutting against the second inclined portion 233b, pressing force is applied from the arm portion 244b to the second inclined portion 233b.

The flat spring 233 elastically deforms due to this pressing force. This causes the pressing portion 233c to be displaced to the right side. As a result, the detection switch 230 is pressed by the pressing portion 233c.

That is to say, upon the operator pivoting the sub-gear shift lever 244 from the high-speed position HP to the neutral position NP, the detection switch 230 is pressed. Thus, the aforementioned control apparatus determines that the sub-transmission apparatus is in the aforementioned neutral state.

Then, upon the operator pivoting the sub-gear shift lever 244 from the neutral position NP to the low-speed position LP, the arm portion 244b separates from the pressing portion 233c, as shown in Fig. 34. This restores the flat spring 233 to the original shape. As a result, the detection switch 230 enters a state of not being pressed.

That is to say, upon the operator pivoting the sub-gear shift lever 244 from the neutral position NP to the low-speed position LP, the detection switch 230 enters a non-pressed state. Thus, the aforementioned control apparatus determines that the sub-transmission apparatus is not in the aforementioned neutral state.

Furthermore, as mentioned above, the switch base portion 231 is fastened to the switch support portion 232 with the switch bolts b2 that pass through the elongated holes 232a. With this configuration, the position of the switch base portion 231 relative to the switch support portion 232 can be readily changed by changing the position of the switch bolts b2 along the elongated holes 232a. Then, the position of the detection switch 230 relative to the pressing portion 233c is changed by changing the position of the switch base portion 231 relative to the switch support portion 232.

That is to say, this configuration enables the position of the detection switch 230 relative to the pressing portion 233c to be readily adjusted.

Also, as mentioned above, the neutral detection mechanism M is arranged in the space surrounded by the right cover 209. Accordingly, the operator can access the neutral detection mechanism M only by removing the right cover 209. Thus, operations such as maintenance of the neutral detection mechanism M can be readily performed.

### Variations of Third Embodiment

Only differences from the above embodiment will now be described.
(1) The traveling apparatus 202 may be of either a crawler type or a semi-crawler type.
(2) The left cover 210 may not be made of a resin. For example, the left cover 210 may be made of a metal.
(3) The right cover 209 may not be made of a resin. For example, the right cover 209 may be made of a metal.
(4) The number of engaging portions 220 may also be one, or may also be three or more.
(5) The number of protruding portions 220b provided in each engaging portion 220 may also be one, or may also be three or more.
(6) The number of groove portions 211a may also be one, or may also be three or more.
(7) The engaging portions 220 may also be provided in a state of protruding from the left cover 210.
(8) The groove portions 211a may also be formed in the left fender 212.
(9) The direction in which the protruding portions 220b protrude is not limited to the left-right direction. The protruding portions 220b may also protrude in any direction as long as the protruding portions 220b protrude in a direction perpendicular to the direction Z in which the central portion 220a extends.
(10) The neutral detection mechanism M may not be provided.
(11) The engaging portions 220 may also be provided in a state of protruding from a central portion of the right cover 209.
(12) The engaging portions 220 may also be provided in a state of protruding from a peripheral portion of a rear portion of the right cover 209. In this case, a configuration may be employed in which the front portion of the right cover 209 is fastened to the right fender 211 with bolts, and the rear portion of the right cover 209 is supported on the outer face 211b of the right fender 211 via the engaging portions 220 and the groove portions 211a.
(13)The engagement portions 220 may not have the protruding portions 220b.
(14) In a state where the central portions 220a pass through the respective groove portions 211a and where the right cover 209 is raised, the shape of the protruding portions 220b may not fit the shape of the inner face 211c of the right fender 211.
(15) Although the above embodiment has taken the tractor as an example of the work vehicle, the work vehicle may also be a mowing machine, a rice planting machine, a combine harvester, a wheel loader, a front loader, a backhoe, and the like.

## Claims

1. A work vehicle comprising:
a vehicle body;
a prime mover unit (2) provided in a front portion of the vehicle body, the prime mover unit having a hood (20);
an operation unit (4) provided rearward of the prime mover unit (2) in the vehicle body, the operation unit including a dashboard (40) located in the rear side of the hood, and an operator seat (42) located rearward of the dashboard at a distance; and
a partition wall member (3) provided below the dashboard (40) in a boundary region between the operation unit (4) and an internal space of the hood (20), a ventilation hole for ventilation from the operation unit toward the internal space (2A) being formed in the partition wall member,
wherein an engine (21) and an air cleaner (24) are arranged in the internal space (2A),
the engine is arranged on a vehicle body-front side within the internal space,
an air intake port (24a) of the air cleaner (24) is open toward a rear side, rearward of the engine (21) within the internal space (2A), and
the partition wall member (3) includes a sound-proof wall plate (32, 33), and a sound absorbing element (34) is attached to the sound-proof wall plate on the internal space side,
**characterized in that** a space (s1) accommodating a battery (26) is provided in the partition wall member (3) below the dashboard (40), and
the sound-proof wall plate (32, 33) extends in an up-down direction only in an area corresponding to a gap between the dashboard and the battery.

2. A work vehicle comprising:
a vehicle body;
a prime mover unit (2) provided in a front portion of the vehicle body, the prime mover unit having a hood (20);
an operation unit (4) provided rearward of the prime mover unit (2) in the vehicle body, the operation unit including a dashboard (40) located in the rear side of the hood, and an operator seat (42) located rearward of the dashboard at a distance; and
a partition wall member (3) provided below the dashboard (40) in a boundary region between the operation unit (4) and an internal space of the hood (20), a ventilation hole for ventilation from the operation unit toward the internal space (2A) being formed in the partition wall member,
wherein an engine (21) and an air cleaner (24) are arranged in the internal space (2A),
the engine is arranged on a vehicle body-front side within the internal space,
an air intake port (24a) of the air cleaner (24) is open toward a rear side, rearward of the engine (21) within the internal space (2A), and
the partition wall member (3) includes a sound-proof wall plate (32, 33), and a sound absorbing element (34) is attached to the sound-proof wall plate on the internal space side,
**characterized in that** the partition wall member (3) includes a main frame portion (30) formed into a lattice shape and an outer wall plate (31) assembled to a rear face of the main frame portion, a plurality of ventilation holes being formed in the outer wall plate, and the sound-proof wall plate (32, 33) being assembled to a front face of the main frame portion,
the sound-proof wall plate (32, 33) includes a sound-insulating plate portion (33) that is made of a sheet metal and opposes the front face of the main frame portion, and the sound absorbing element (34) that is made of a soft resin and faces the internal space of the hood (20), and
the sound-insulating plate portion (34) is arranged with a gap for ventilation formed between the sound-insulating plate portion and the front face of the main frame portion.

3. The work vehicle according to claim 2, wherein
a space (s1) for accommodating a battery (26) is provided in the partition wall member (3) below the dashboard (40), and
the sound-proof wall plate (32, 33) extends in an up-down direction only in an area corresponding to a gap between the dashboard and the battery.

4. The work vehicle according to anyone of claims 1 to 3, wherein
a radiator (23) and a cooling fan (22) are provided rearward of the engine (21) within the internal space,
the air intake port of the air cleaner (24) is located forward of the radiator (23), and
the sound-proof wall plate (33) is located rearward of the radiator.

5. The work vehicle according to any one of claims 1 to 4, wherein
an air intake pipe (24b) of the air cleaner (24) includes a front air intake port (24c) in a front portion of the internal space, in addition to the air intake port.

## Patentansprüche

1. Arbeitsfahrzeug, umfassend:
eine Fahrzeugkarosserie,
eine Antriebsmaschineneinheit (2), die in einem vorderen Abschnitt der Fahrzeugkarosserie bereitgestellt ist, wobei die Antriebsmaschineneinheit eine Haube (20) aufweist,
eine Bedieneinheit (4), die hinter der Antriebsmaschineneinheit (2) in der Fahrzeugkarosserie bereitgestellt ist, wobei die Bedieneinheit ein Armaturenbrett (40), das sich auf der Rückseite der Haube befindet, und einen Führersitz (42) umfasst, der sich in einiger Entfernung hinter dem Armaturenbrett befindet, und
ein Trennwandelement (3), das unterhalb des Armaturenbretts (40) in einem Grenzbereich zwischen der Bedieneinheit (4) und einem Innenraum der Haube (20) bereitgestellt ist, wobei ein Belüftungsloch zur Belüftung von der Bedieneinheit in Richtung des Innenraums (2A) in dem Trennwandelement ausgebildet ist,
wobei im Innenraum (2A) ein Motor (21) und ein Luftreiniger (24) angeordnet sind,
der Motor an einer Fahrzeugkarosserievorderseite innerhalb des Innenraums angeordnet ist,
eine Lufteinlassöffnung (24a) des Luftreinigers (24) in Richtung einer Rückseite hinter dem Motor (21) innerhalb des Innenraums (2A) offen ist,
das Trennwandelement (3) eine schalldichte Wandplatte (32, 33) umfasst und
an der schalldichten Wandplatte auf der Seite des Innenraums ein schallabsorbierendes Element (34) angebracht ist,
**dadurch gekennzeichnet, dass** in dem Trennwandelement (3) unterhalb des Armaturenbretts (40) ein Raum (s1) bereitgestellt ist, der eine Batterie (26) aufnimmt, und
sich die schalldichte Wandplatte (32, 33) in einer Auf-Ab-Richtung nur in einem Bereich erstreckt, der einem Spalt zwischen dem Armaturenbrett und der Batterie entspricht.

2. Arbeitsfahrzeug, umfassend:
eine Fahrzeugkarosserie,
eine Antriebsmaschineneinheit (2), die in einem vorderen Abschnitt der Fahrzeugkarosserie bereitgestellt ist, wobei die Antriebsmaschineneinheit eine Haube (20) aufweist,
eine Bedieneinheit (4), die hinter der Antriebsmaschineneinheit (2) in der Fahrzeugkarosserie bereitgestellt ist, wobei die Bedieneinheit ein Armaturenbrett (40), das sich auf der Rückseite der Haube befindet, und einen Führersitz (42) umfasst, der sich in einiger Entfernung hinter dem Armaturenbrett befindet, und
ein Trennwandelement (3), das unterhalb des Armaturenbretts (40) in einem Grenzbereich zwischen der Bedieneinheit (4) und einem Innenraum der Haube (20) bereitgestellt ist, wobei ein Belüftungsloch zur Belüftung von der Bedieneinheit in Richtung des Innenraums (2A) in dem Trennwandelement ausgebildet ist,
wobei im Innenraum (2A) ein Motor (21) und ein Luftreiniger (24) angeordnet sind,
der Motor an einer Fahrzeugkarosserievorderseite innerhalb des Innenraums angeordnet ist,
eine Lufteinlassöffnung (24a) des Luftreinigers (24) in Richtung einer Rückseite hinter dem Motor (21) innerhalb des Innenraums (2A) offen ist,
das Trennwandelement (3) eine schalldichte Wandplatte (32, 33) umfasst und
an der schalldichten Wandplatte auf der Seite des Innenraums ein schallabsorbierendes Element (34) angebracht ist,
**dadurch gekennzeichnet, dass** das Trennwandelement (3) einen gitterförmig ausgebildeten Hauptrahmenabschnitt (30) und eine an einer Rückseite des Hauptrahmenabschnitts angebrachte Außenwandplatte (31) umfasst, wobei in der äußeren Wandplatte mehrere Belüftungslöcher ausgebildet sind und die schalldichte Wandplatte (32, 33) an einer Vorderseite des Hauptrahmenabschnitts montiert ist,
die schalldichte Wandplatte (32, 33) einen schallisolierenden Plattenabschnitt (33), der aus einem Blech besteht und der Vorderseite des Hauptrahmenabschnitts gegenüberliegt, und das schallabsorbierende Element (34), das aus einem weichen Harz besteht und dem Innenraum der Haube (20) zugewandt ist, umfasst, und
der schallisolierende Plattenabschnitt (34) mit einem Spalt zur Belüftung angeordnet ist, der zwischen dem schallisolierenden Plattenabschnitt und der Vorderseite des Hauptrahmenabschnitts ausgebildet ist.

3. Arbeitsfahrzeug nach Anspruch 2, wobei
ein Raum (s1) zum Aufnehmen einer Batterie (26) in dem Trennwandelement (3) unterhalb des Armaturenbretts (40) bereitgestellt ist, und
sich die schalldichte Wandplatte (32, 33) in einer Auf-Ab-Richtung nur in einem Bereich erstreckt, der einem Spalt zwischen dem Armaturenbrett und der Batterie entspricht.

4. Arbeitsfahrzeug nach einem der Ansprüche 1 bis 3, wobei
ein Kühler (23) und ein Kühlgebläse (22) hinter dem Motor (21) innerhalb des Innenraums bereitgestellt sind,
sich die Lufteinlassöffnung des Luftreingers (24) vor dem Kühler (23) befindet und
sich die schalldichte Wandplatte (33) hinter dem Kühler befindet.

5. Arbeitsfahrzeug nach einem der Ansprüche 1 bis 4, wobei
ein Lufteinlassrohr (24b) des Luftreinigers (24) zusätzlich zur Lufteinlassöffnung eine vordere Lufteinlassöffnung (24c) in einem vorderen Abschnitt des Innenraums umfasst.

## Revendications

1. Véhicule de travail comprenant :
un corps de véhicule ;
une unité de moteur principal (2) prévue dans une partie avant du corps de véhicule, l'unité de moteur principal ayant un capot (20) ;
une unité d'actionnement (4) prévue vers l'arrière de l'unité de moteur principal (2) dans le corps de véhicule, l'unité d'actionnement comprenant un tableau de bord (40) positionné du côté arrière du capot, et un siège d'opérateur (42) positionné à l'arrière du tableau de bord à une certaine distance ; et
un élément de paroi de séparation (3) prévu au-dessous du tableau de bord (40) dans une région de limite entre l'unité d'actionnement (4) et un espace interne du capot (20), un trou de ventilation pour la ventilation de l'unité d'actionnement vers l'espace interne (2A) étant formé dans l'élément de paroi de séparation,
dans lequel un moteur (21) et un filtre à air (24) sont agencés dans l'espace interne (2A),
le moteur est agencé sur un côté avant du corps de véhicule à l'intérieur de l'espace interne,
un orifice d'admission d'air (24a) du filtre à air (24) est ouvert vers un côté arrière, à l'arrière du moteur (21) dans l'espace interne (2A), et
un élément de paroi de séparation (3) comprend une plaque de paroi d'insonorisation (32, 33) et un élément d'absorption de son (34) est fixé à la plaque de paroi d'insonorisation du côté de l'espace interne,
**caractérisé en ce qu'**un espace (s1) logeant une batterie (26) est prévu dans l'élément de paroi de séparation (3) au-dessous du tableau de bord (40), et
la plaque de paroi d'insonorisation (32, 33) s'étend dans une direction ascendante - descendante uniquement dans une zone correspondant à un espace entre le tableau de bord et la batterie.

2. Véhicule de travail comprenant :
un corps de véhicule ;
une unité de moteur principal (2) prévue dans une partie avant du corps de véhicule, l'unité de moteur principal ayant un capot (20) ;
une unité d'actionnement (4) prévue vers l'arrière de l'unité de moteur principal (2) dans le corps de véhicule, l'unité d'actionnement comprenant un tableau de bord (40) positionné dans le coté arrière du capot, et un siège d'opérateur (42) positionné à l'arrière du tableau de bord à une certaine distance ; et
un élément de paroi de séparation (3) prévu au-dessous du tableau de bord (40) dans une région de limite entre l'unité d'actionnement (4) et un espace interne du capot (20), un trou de ventilation pour la ventilation de l'unité d'actionnement vers l'espace interne (2A) étant formé dans l'élément de paroi de séparation,
dans lequel un moteur (21) et un filtre à air (24) sont agencés dans l'espace interne (2A),
le moteur est agencé sur un côté avant du corps de véhicule à l'intérieur de l'espace interne,
un orifice d'admission d'air (24a) du filtre à air (24) est ouvert vers un côté arrière, à l'arrière du moteur (21) dans l'espace interne (2A), et
l'élément de paroi de séparation (3) comprend une plaque de paroi d'insonorisation (32, 33), et un élément d'absorption de son (34) est fixé sur la plaque de paroi d'insonorisation du côté de l'espace interne,
**caractérisé en ce que** l'élément de paroi de séparation (3) comprend une partie de bâti principale (30) formée selon une forme de treillis et une plaque de paroi externe (31) assemblée sur une face arrière de la partie de bâti principale, une pluralité de trous de ventilation étant formés dans la plaque de paroi externe, et la plaque de paroi d'insonorisation (32, 33) étant assemblée à une face avant de la partie de bâti principale,
la plaque de paroi d'insonorisation (32, 33) comprend une partie de plaque d'isolation sonore (33) qui est réalisée à partir d'un métal en feuille et est opposée à la face avant de la partie de bâti principal, et l'élément d'absorption sonore (34) est réalisé à partir d'une résine souple et fait face à l'espace interne du capot (20), et
la partie de plaque d'isolation sonore (34) est agencée avec un espace pour la ventilation, formé entre la partie de plaque d'isolation sonore et la face avant de la partie de bâti principale.

3. Véhicule de travail selon la revendication 2, dans lequel :
un espace (si) pour loger une batterie (26) est prévu dans l'élément de paroi de séparation (3) au-dessous du tableau de bord (40), et
la plaque de paroi d'insonorisation (32, 33) s'étend dans une direction ascendante - descendante uniquement dans une zone correspondant à un espace entre le tableau de bord et la batterie.

4. Véhicule de travail selon l'une quelconque des revendications 1 à 3, dans lequel :
un radiateur (23) et un ventilateur de refroidissement (22) sont prévus à l'arrière du moteur (21) à l'intérieur de l'espace interne,
l'orifice d'admission d'air du filtre à air (24) est positionné vers l'avant du radiateur (23), et
la plaque de paroi d'insonorisation (33) est positionnée vers l'arrière du radiateur.

5. Véhicule de travail selon l'une quelconque des revendications 1 à 4, dans lequel :
le tuyau d'admission d'air (24b) du filtre à air (24) comprend un orifice d'admission d'air avant (24c) dans une partie avant de l'espace interne, en plus de l'orifice d'admission d'air.
